(19) **Europäisches Patentamt**
**European Patent Office**
**Office européen des brevets**

(11) **EP 4 369 708 B1**

(12) **EUROPÄISCHE PATENTSCHRIFT**

(45) Veröffentlichungstag und Bekanntmachung des Hinweises auf die Patenterteilung:
**22.07.2026   Patentblatt 2026/30**

(21) Anmeldenummer: **24166959.7**

(22) Anmeldetag: **11.04.2018**

(51) Internationale Patentklassifikation (IPC):
*H04N 23/54* (2023.01)    *H04N 23/55* (2023.01)
*H04N 23/58* (2023.01)    *H04N 23/68* (2023.01)
*H04N 23/695* (2023.01)    *H04N 23/90* (2023.01)
*H04N 23/698* (2023.01)    *H04N 13/271* (2018.01)

(52) Gemeinsame Patentklassifikation (CPC):
**H04N 23/698; H04N 23/54; H04N 23/55;**
**H04N 23/58; H04N 23/695; H04N 23/90;**
H04N 13/271

(54) **VORRICHTUNG ZUR ABBILDUNG VON TEILGESICHTSFELDERN, MULTIAPERTURABBILDUNGSVORRICHTUNG UND VERFAHREN ZUM BEREITSTELLEN DERSELBEN**

DEVICE FOR REPRESENTING PARTIAL FIELDS OF VIEW, MULTI-APERTURE REPRESENTATION DEVICE AND METHOD FOR PROVIDING SAME

DISPOSITIF DE REPRÉSENTATION DE CHAMPS DE VISION PARTIELS, DISPOSITIF DE REPRÉSENTATION À OUVERTURES MULTIPLES ET PROCÉDÉ DE PRODUCTION DE CEUX-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **13.04.2017   DE 102017206442**

(43) Veröffentlichungstag der Anmeldung:
**15.05.2024   Patentblatt 2024/20**

(62) Dokumentnummer(n) der früheren Anmeldung(en) nach Art. 76 EPÜ:
**18724780.4 / 3 610 637**

(73) Patentinhaber: **Fraunhofer-Gesellschaft zur Förderung**
**der angewandten Forschung e.V.**
**80686 München (DE)**

(72) Erfinder:
 • **DUPARRÉ, Jacques**
  **07745 Jena (DE)**
 • **OBERDÖRSTER, Alexander**
  **07749 Jena (DE)**
 • **WIPPERMANN, Frank**
  **98617 Meiningen (DE)**
 • **BRÜCKNER, Andreas**
  **07743 Jena (DE)**

(74) Vertreter: **König, Andreas Rudolf**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
WO-A1-2017/053874       DE-A1- 102015 215 836
DE-A1- 102015 215 841       DE-A1- 102015 215 845
DE-A1- 102015 216 140

## Beschreibung

Die vorliegende Erfindung bezieht sich auf eine Vorrichtung zum mehrkanaligen Erfassen eines Gesamtgesichtsfelds, auf eine Ergänzungsvorrichtung zum Ergänzen einer bestehenden Kamera, auf eine Multiaperturabbildungsvorrichtung und auf Verfahren zum Herstellen einer hierin beschriebenen Vorrichtung und Multiaperturabbildungsvorrichtung. Die vorliegende Erfindung bezieht sich ferner auf eine symmetrische Kanalanordnung und unterschiedliche Gesichtsfelder.

Konventionelle Kameras besitzen einen Abbildungskanal, der das gesamte Objektfeld abbildet. Andere Kameras umfassen mehrere Abbildungskanäle, um das Gesamtgesichtsfeld durch mehrere Teilgesichtsfelder abzubilden. Zum korrekten Stitching (Zusammennähen bzw. Zusammenfügen) von Bildern für ein Gesamtgesichtsfeld mit Objekten mit unterschiedlichen Abständen von der Kamera kann es erforderlich sein, die Berechnung einer Tiefenkarte des aufgenommenen Gesamtgesichtsfelds durchzuführen. Wird hierfür eine stereoskope Erfassung genutzt, so kann es erforderlich sein, eine Perspektive der (künstlichen, mittleren) Referenzkamera synthetisch zu erzeugen. Dies kann zu Okkultations- oder Occlusionsproblemen führen, da manche Objekte entlang einer Blickrichtung verdeckt sein können. Für die Ausgabe einer Vorschau (Preview) und/oder eines Videos kann eine Bildverarbeitung, etwa mittels Stitching, durchgeführt werden, was Berechnungsaufwand erfordert.

DE 10 2015 216 140 A1 ist eine 3D-Multiaperturabbildungsvorrichtung beschrieben.

DE 10 2015 215 845 A1 ist eine Multiaperturabbildungsvorrichtung mit einer Fokussteuerung beschrieben.

In DE 10 2015 215 836 A1 ist eine Multiaperturabbildungsvorrichtung mit einer reflektierende Facetten aufweisenden Strahlumlenkvorrichtung beschrieben.

In DE 10 2015 215 841 A1 ist eine Vorrichtung mit einer Multikanalabbildungsvorrichtung und Verfahren zum Herstellen derselben beschrieben.

WO 2017/053874 A1 beschreibt ein System zur Nachverfolgung von Objekten.

Wünschenswert wäre demnach ein Konzept zum Bereitstellen hochqualitativer Bilder, die die oben genannten Nachteile nicht aufweisen.

Die Aufgabe der vorliegenden Erfindung besteht deshalb darin, hochqualitative Bilder des Gesamtgesichtsfelds bereitzustellen und gleichzeitig eine Einflussnahme auf die Bildaufnahme mit geringem Vorverarbeitungsaufwand bereitzustellen.

Diese Aufgabe wird durch den Gegenstand der unabhängigen Patentansprüche gelöst.

Eine Erkenntnis der vorliegenden Erfindung besteht darin, erkannt zu haben, dass obige Aufgabe dadurch gelöst werden kann, dass Bildinformation, etwa eine Auflösung eines Gesamtgesichtsfelds durch Kombination derselben mit Bildinformation von Teilgesichtsfeldern desselben Gesamtgesichtsfelds erhöht werden kann, hierbei die Bildinformation des Gesamtgesichtsfelds jedoch bereits als Grobinformation vorliegt und verwendet werden kann und durch die Verwendung der Gesamtbildinformation das Auftreten von Okkultations-Artefakten vermieden werden kann.

Gemäß Ausführungsbeispielen wird eine Multiaperturabbildungsvorrichtung gemäß Patentanspruch 1 und ein zugehöriges Verfahren nach Patentanspruch 15 bereitgestellt.

Gemäß einem Ausführungsbeispiel umfasst eine Vorrichtung einen Bildsensor und ein Array von optischen Kanälen. Jeder optische Kanal umfasst eine Optik zur Abbildung eines Teilgesichtsfelds eines Gesamtgesichtsfelds auf einen Bildsensorbereich des Bildsensors. Ein erster optischer Kanal des Arrays ist ausgebildet, um ein erstes Teilgesichtsfeld des Gesamtgesichtsfelds abzubilden und ein zweiter optischer Kanal des Arrays ist ausgebildet, um ein zweites Teilgesichtsfeld des Gesamtgesichtsfelds abzubilden. Die Vorrichtung umfasst eine Berechnungseinheit, die ausgebildet ist, um Bildinformationen des ersten und zweiten Teilgesichtsfelds basierend auf den abgebildeten Teilgesichtsfeldern zu erhalten. Die Berechnungseinheit ist ferner ausgebildet, um eine Bildinformation des Gesamtgesichtsfelds zu erhalten, etwa von einer weiteren Vorrichtung, und um die Bildinformationen der Teilgesichtsfelder mit der Bildinformation des Gesamtgesichtsfelds zu kombinieren, um eine kombinierte Bildinformation des Gesamtgesichtsfelds zu erzeugen. Durch die Kombination der Bildinformationen der Teilgesichtsfelder und des Gesamtgesichtsfelds wird eine hochqualitative kombinierte Bildinformation erhalten, da ein hohes Maß an Bildinformation vorliegt. Ferner ermöglicht die Bildinformation des Gesamtgesichtsfelds eine Einflussnahme mit geringem Vorverarbeitungsaufwand, da sie einem Benutzer angezeigt werden kann, ohne dass Teilbilder gestitcht werden müssen.

Gemäß einem weiteren Ausführungsbeispiel umfasst eine Ergänzungsvorrichtung eine derartige Vorrichtung und ist konfiguriert, um mit einer Kamera gekoppelt zu werden, um von dieser die Bildinformation des Gesamtgesichtsfelds zu erhalten. Dies ermöglicht es, bereits bestehende gegebenenfalls Mono-Kameras durch die zusätzliche Abbildung der Teilgesichtsfelder zu ergänzen, so dass eine hochqualitative kombinierte Bildinformation des Gesamtgesichtsfelds erhalten wird. Gleichzeitig kann das Bild der Kamera genutzt werden, um eine Einflussnahme auf die Bildverarbeitung auszuführen, da die Information bezüglich des Gesamtgesichtsfelds bereits zumindest grob vorliegt.

Gemäß einem weiteren Ausführungsbeispiel umfasst eine Multiaperturabbildungsvorrichtung einen Bildsensor, ein Array von optischen Kanälen, wobei jeder optische Kanal eine Optik zur Abbildung zumindest eines Teilgesichtsfelds eines Gesamtgesichtsfelds auf einem Bildsensorbereich des Bildsensors umfasst. Ein erster optischer Kanal des Arrays ist ausgebildet, um ein erstes Teilgesichtsfeld des Gesamtgesichtsfelds abzubilden, wobei ein zweiter optischer Kanal des Arrays ausgebildet ist, um ein zweites Teilgesichtsfeld des Gesamtgesichtsfelds abzubilden, und wobei ein dritter optischer Kanal ausgebildet ist, um das Gesamtgesichtsfeld vollständig abzubilden. Dies ermöglicht den Erhalt sowohl einer Bildinformation bezüglich des Gesamtgesichtsfelds als auch zusätzlich den Erhalt von Bildinformationen bezüglich der Teilgesichtsfelder desselben Gesamtgesichtsfelds, so dass Bildbereiche der Teilgesichtsfelder mehrfach abgetastet werden, was beispielsweise eine stereoskop erzeugte Tiefenkarte und damit hochqualitative Bildgenerierung ermöglicht. Gleichzeitig liegt ebenfalls zusätzlich zu den Informationen bezüglich der Teilgesichtsfelder die Information bezüglich des Gesamtgesichtsfelds vor, was die Einflussnahme des Benutzers ohne vorherige Bildbearbeitung ermöglicht.

Weitere Ausführungsbeispiele beziehen sich auf ein Verfahren zum Herstellen einer Vorrichtung zum mehrkanaligen Erfassen eines Gesamtgesichtsfelds und auf ein Verfahren zum Bereitstellen einer Multiaperturabbildungsvorrichtung.

Die genannten Ausführungsbeispiele ermöglichen die Vermeidung oder Verringerung der Okkultation, da die Hauptblickrichtung der Abbildung des Gesamtgesichtsfelds und der kombinierten Bildinformation des Gesamtgesichtsfelds unverändert ist und durch die Abbildungen der Teilgesichtsfelder ergänzt wird.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:

Fig. 1    eine schematische perspektivische Ansicht einer Multiaperturabbildungsvorrichtung gemäß einem Ausführungsbeispiel;

Fig. 2a-c    schematische Darstellungen von Anordnungen von Teilgesichtsfeldern in einem Gesamtgesichtsfeld , gemäß einem Ausführungsbeispiel;

Fig. 3    eine schematische perspektivische Darstellung einer Multiaperturabbildungsvorrichtung, die eine Berechnungseinheit aufweist, gemäß einem Ausführungsbeispiel;

Fig. 4    eine schematische Darstellung von Bildsensorbereichen wie sie beispielsweise in der Multiaperturabbildungsvorrichtung gemäß Fig. 1 oder Fig. 3 angeordnet sein können, gemäß einem Ausführungsbeispiel

Fig. 5    eine schematische Darstellung einer möglichen Ausgestaltung der Berechnungseinheit, gemäß einem Ausführungsbeispiel;

Fig. 6    eine schematische Aufsicht auf die Multiaperturabbildungsvorrichtung aus Fig. 3 und gemäß einem Ausführungsbeispiel, die ausgebildet ist, um eine Tiefenkarte zu erstellen;

Fig. 7    eine schematische perspektivische Ansicht einer Multiaperturabbildungsvorrichtung gemäß einem weiteren Ausführungsbeispiel, die eine Anzeigeeinrichtung umfasst;

Fig. 8    eine schematische perspektivische Ansicht einer Multiaperturabbildungsvorrichtung gemäß einem Ausführungsbeispiel, die einen optischen Bildstabilisator und einen elektronischen Bildstabilisator aufweist;

Fig. 9    eine schematische perspektivische Ansicht einer Multiaperturabbildungsvorrichtung gemäß einem weiteren Ausführungsbeispiel, die eine Fokussiereinrichtung umfasst;

Fig. 10    eine schematische perspektivische Darstellung einer Multiaperturabbildungsvorrichtung gemäß einem weiteren Ausführungsbeispiel, bei dem die Bildsensorbereiche auf zumindest zwei voneinander verschiedenen Chips angeordnet sind und gegeneinander orientiert sind;

Fig. 11    eine schematische perspektivische Ansicht einer Multiaperturabbildungsvorrichtung gemäß einem weiteren Ausführungsbeispiel, bei der Optiken unterschiedliche Brennweiten aufweisen;

Fig. 12    eine schematische perspektivische Ansicht einer Vorrichtung gemäß einem weiteren Ausführungsbeispiel;

Fig. 13    eine schematische perspektivische Ansicht einer Ergänzungsvorrichtung gemäß einem Ausführungsbeispiel;

Fig. 14    ein schematisches Ablaufdiagramm eines Verfahrens zum Bereitstellen einer Vorrichtung gemäß einem Ausführungsbeispiel; und

Fig. 15    ein schematisches Ablaufdiagramm eines Verfahrens zum Bereitstellen einer Multiaperturabbildungsvorrichtung gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

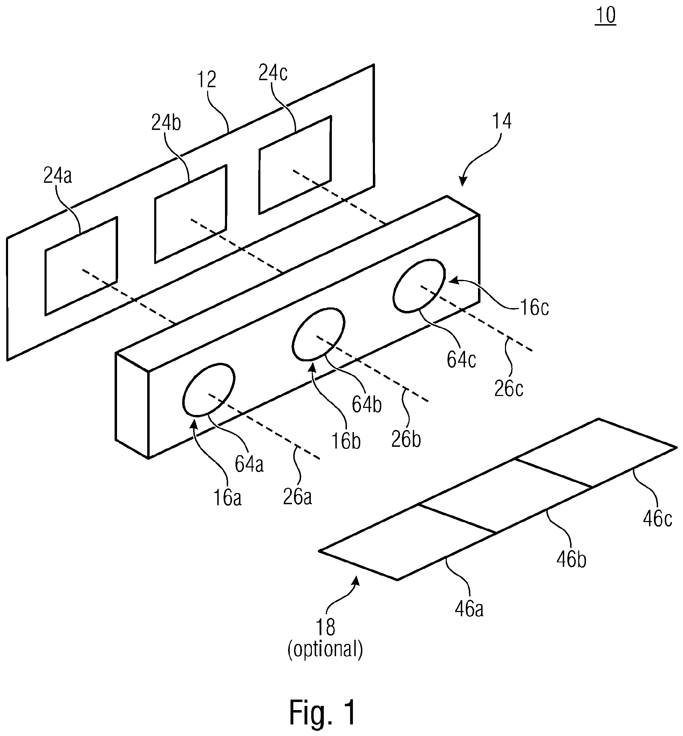

Fig. 1 zeigt eine schematische perspektivische Ansicht einer Multiaperturabbildungsvorrichtung 10 gemäß einem Ausführungsbeispiel. Die Multiaperturabbildungsvorrichtung 10 umfasst einen Bildsensor 12 mit einer Mehrzahl von Bildsensorbereichen 24a-c. Der Bildsensor 12 kann so ausgestaltet sein, dass die Bildsensorbereiche 24a-c Teil eines gemeinsamen Chips sind, kann aber alternativ auch mehrere Komponenten aufweisen, das bedeutet, die Bildsensorbereiche 24a-c können auf unterschiedlichen Chips angeordnet sein. Alternativ oder zusätzlich können die Bildsensorbereiche 24a und 24c gegenüber dem Bildsensorbereich 24b und/oder der Bildsensorbereich 24a gegenüber dem Bildsensorbereich 24b eine unterschiedliche Größe der Sensorfläche aufweisen und/oder eine unterschiedliche Anzahl und/oder Größe von Pixeln aufweisen.

Die Multiaperturabbildungsvorrichtung 10 umfasst ferner ein Array 14 von optischen Kanälen 16a-c. Jeder der optischen Kanäle 16a-c umfasst eine Optik 64a-c zur Abbildung zumindest eines Teilgesichtsfelds eines Gesamtgesichtsfelds oder Objektbereichs auf einen Bildsensorbereich 24a-c des Bildsensors 12. Jeweils eine der Optiken 64a-c ist einem der Bildsensorbereiche 24a-c zugeordnet und ausgebildet, um einen Strahlengang 26a-c zu beeinflussen, etwa durch Bündelung oder Streuung, so dass das jeweilige Teilgesichtsfeld bzw. Gesamtgesichtsfeld auf den Bildsensorbereich 24a-c abgebildet wird. Die Optiken 64a-c können an einem gemeinsamen Träger angeordnet sein, um das Array 14 zu bilden, können aber auch anders mechanisch miteinander verbunden sein oder mechanisch nicht in Kontakt stehen. Eigenschaften der optischen Kanäle, etwa Länge, Ausdehnung senkrecht zur optischen Achse oder dergleichen und/oder Eigenschaften der Optiken, etwa eine Brennweite, Blendenzahl, Aperturdurchmesser, Aberrationskorrektur oder physikalische Abmessung können zwischen den optischen Kanälen 16a, 16b und/oder 16c variieren und voneinander verschieden sein.

Zwei der optischen Kanäle 16a-c sind ausgebildet, um jeweils ein Teilgesichtsfeld auf den zugeordneten Bildsensorbereich 24a-c abzubilden. Die Abbildung eines Teilgesichtsfelds bedeutet dabei, dass das Gesamtgesichtsfeld unvollständig abgebildet wird. Ein weiterer optischer Kanal der optischen Kanäle 16a-c ist ausgebildet, um das Gesamtgesichtsfeld vollständig abzubilden. Die Multiaperturabbildungsvorrichtung 10 ist beispielsweise so ausgestaltet, dass der optische Kanal 16b ausgebildet ist, um das Gesamtgesichtsfeld vollständig zu erfassen. Die optischen Kanäle 16a und 16c sind beispielsweise ausgebildet, um einander höchstens unvollständig überlappende oder disjunkt zueinander angeordnete Teilgesichtsfelder des Gesamtgesichtsfelds zu erfassen. Das bedeutet, dass die Anordnung der Optiken 64a und 64c zur Erfassung des ersten und zweiten Teilgesichtsfelds in dem Array 14 bezogen auf die Optik 64b zur Erfassung der Abbildung des Gesamtgesichtsfelds symmetrisch sein kann und/oder dass die Anordnung der Bildsensorbereiche 24a und 24c zur Abbildung des ersten und zweiten Teilgesichtsfelds bezogen auf einen Ort des Bildsensorbereichs 24b zur Abbildung des Gesamtgesichtsfelds symmetrisch sein kann. Obwohl auch beliebige andere Zuordnungen zwischen Gesichtsfeldern, Optiken und Bildsensorbereichen möglich sind, bietet insbesondere die symmetrische Anordnung den Vorteil, dass die zusätzliche Erfassung der Teilgesichtsfelder eine symmetrische Disparität bezüglich des mittleren Blickfelds, d. h. der Erfassung des Gesamtgesichtsfelds, ermöglicht.

Die Multiaperturabbildungsvorrichtung 10 kann eine optionale Strahlumlenkeinrichtung 18 aufweisen, die wiederum Strahlumlenkbereiche 46a-c umfasst, wobei die Strahlumlenkeinrichtung 18 ausgebildet ist, um mit jedem der Strahlumlenkbereiche 46a-c einen Strahlengang 26a-c umzulenken. Die Strahlumlenkeinrichtung 18 kann eine Spiegelfläche umfassen, die die Strahlumlenkbereiche 46a-c aufweist. Alternativ können zumindest zwei der Strahlumlenkbereiche 46a-c geneigt zueinander sein und eine Mehrzahl von Spiegelflächen bilden. Alternativ oder zusätzlich kann die Strahlumlenkeinrichtung 18 eine Mehrzahl oder Vielzahl Facetten aufweisen. Die Verwendung der Strahlumlenkeinrichtung 18 kann vorteilhaft sein, wenn das zu erfassende Gesichtsfeld in einer von der Blickrichtung zwischen dem Bildsensor 12 und dem Array 14 verschiedenen Richtung der Multiaperturabbildungsvorrichtung 10 liegt. Alternativ kann in Abwesenheit der Strahlumlenkeinrichtung 18 das Gesamtgesichtsfeld entlang der Blickrichtung der Multiaperturabbildungsvorrichtung 10 bzw. der Richtung zwischen dem Bildsensor 12 und dem Array 14 bzw. darüber hinaus erfasst werden. Eine Anordnung der Strahlumlenkeinrichtung 18 kann jedoch ermöglichen, durch translatorische und/oder rotatorische Bewegung der Strahlumlenkeinrichtung 18 die Blickrichtung der Multiaperturabbildungsvorrichtung 10 zu verändern, ohne hierfür die Orientierung des Bildsensors 12 und/oder des Arrays 14 im Raum verändern zu müssen.

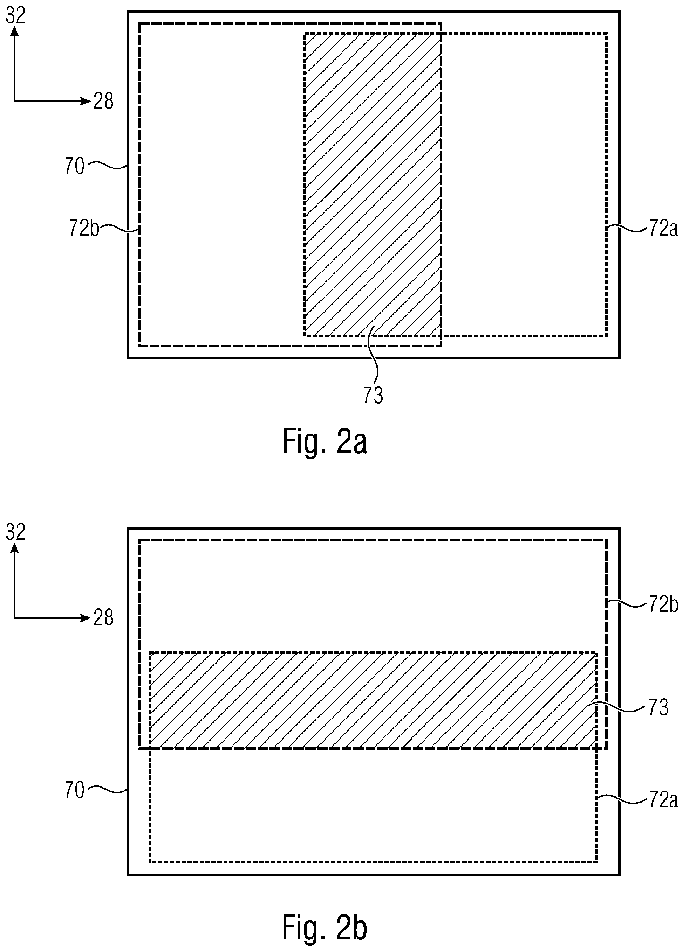

Fig. 2a zeigt eine schematische Darstellung einer Anordnung von Teilgesichtsfeldern 72a und 72b in einem Gesamtgesichtsfeld 70, das beispielsweise durch die Multiaperturabbildungsvorrichtung 10 erfassbar ist. Beispielsweise kann das Gesamtgesichtsfeld 70 mit dem optischen Kanal 16b auf den Bildsensorbereich 24b abgebildet werden. Beispielsweise kann der optische Kanal 16a konfiguriert sein, um das Teilgesichtsfeld 72a zu erfassen und auf den Bildsensorbereich 24a abzubilden. Der optische Kanal 16c kann ausgebildet sein, um das Teilgesichtsfeld 72b zu erfassen und auf den Bildsensorbereich 24c abzubilden. Das bedeutet, dass eine Gruppe von optischen Kanälen ausgebildet sein kann, um genau zwei Teilgesichtsfelder 72a und 72b zu erfassen.

Obwohl zur besseren Unterscheidbarkeit mit unterschiedlicher Ausdehnung dargestellt, können die Teilgesichtsfelder 72a und 72b entlang zumindest einer Bildrichtung 28 oder 32 eine gleiche oder vergleichbare Ausdehnung aufweisen, etwa entlang der Bildrichtung 32. Die Ausdehnung der Teilgesichtsfelder 72a und 72b kann identisch zu der Ausdehnung des Gesamtgesichtsfelds 70 entlang der Bildrichtung 32 sein. Das bedeutet, die Teilgesichtsfelder 72a und 72b können das Gesamtgesichtsfeld 70 entlang der Bildrichtung 32 vollständig erfassen oder aufnehmen und entlang einer anderen senkrecht hierzu angeordneten Bildrichtung 28 das Gesamtgesichtsfeld nur teilweise erfassen oder aufnehmen und versetzt zueinander angeordnet sein, so dass sich kombinatorisch auch entlang der zweiten Richtung eine vollständige Erfassung des Gesamtgesichtsfeldes 70 ergibt. Hierbei können die Teilgesichtsfelder 72a und 72b disjunkt zueinander sein oder höchstens unvollständig in einem Überlappbereich 73, der sich entlang der Bildrichtung 32 in dem Gesamtgesichtsfeld 70 möglicherweise vollständig erstreckt, miteinander überlappen. Eine Gruppe von optischen Kanälen umfassend die optischen Kanäle 16a und 16c kann ausgebildet sein, um zusammengenommen das Gesamtgesichtsfeld 70 vollständig abzubilden. Die Bildrichtung 28 kann beispielsweise eine Horizontale eines bereitzustellenden Bilds sein. Vereinfacht stellen die Bildrichtungen 28 und 32 zwei beliebig im Raum stehende unterschiedliche Bildrichtungen dar.

Fig. 2b zeigt eine schematische Darstellung einer Anordnung der Teilgesichtsfelder 72a und 72b, die entlang einer anderen Bildrichtung, der Bildrichtung 32, versetzt zueinander angeordnet sind und sich gegenseitig überlappen. Die Teilgesichtsfelder 72a und 72b können das Gesamtgesichtsfeld 70 entlang der Bildrichtung 28 jeweils vollständig und entlang der Bildrichtung 32 unvollständig erfassen. Der Überlappbereich 73 ist beispielsweise vollständig in dem Gesamtgesichtsfeld 70 entlang der Bildrichtung 28 angeordnet.

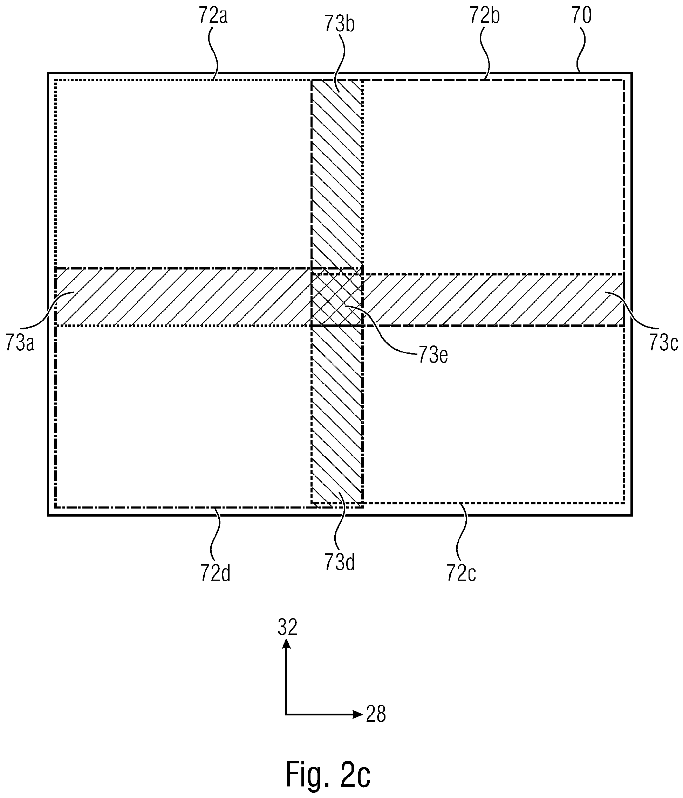

Fig. 2c zeigt eine schematische Darstellung von vier Teilgesichtsfeldern 72a bis 72d, die das Gesamtgesichtsfeld 70 in jeweils beiden Richtungen 28 und 32 unvollständig erfassen. Zwei benachbarte Teilgesichtsfelder 72a und 72b überlappen sich in einem Überlappungsbereich 73b. Zwei überlappende Teilgesichtsfelder 72b und 72c überlappen sich in einem Überlappungsbereich 73c. In ähnlicher Weise überlappen sich Teilgesichtsfelder 72c und 72d in einem Überlappungsbereich 73d und das Teilgesichtsfeld 72d mit dem Teilgesichtsfeld 72a in einem Überlappbereich 73a. Alle vier Teilgesichtsfelder 72a bis 72d können sich in einem Überlappbereich 73e des Gesamtgesichtsfelds 70 überlappen.

Zur Erfassung des Gesamtgesichtsfelds 70 und der Teilgesichtsfelder 72a-d kann eine Multiaperturabbildungsvorrichtung ähnlich wie im Zusammenhang mit Fig. 1 beschrieben ausgebildet sein, wobei das Array 14 beispielsweise fünf Optiken aufweisen kann, vier zur Erfassung von Teilgesichtsfeldern 72a-d und eine Optik zur Erfassung des Gesamtgesichtsfelds 70.

In den Überlappbereichen 73a bis 73e steht eine hohe Anzahl von Bildinformationen zur Verfügung. So wird beispielsweise der Überlappbereich 73b über das Gesamtgesichtsfeld 70, das Teilgesichtsfeld 72a und das Teilgesichtsfeld 72b erfasst. Ein Bildformat des Gesamtgesichtsfelds kann einer redundanzfreien Kombination der abgebildeten Teilgesichtsfelder entsprechen, beispielsweise der Teilgesichtsfelder 72a-d in Fig. 2c, wobei die Überlappbereiche 73a-e jeweils nur einfach gezählt werden. Im Zusammenhang mit den Fig. 2a und 2b gilt dies für die redundanzfreie Kombination der Teilgesichtsfelder 72a und 72b.

Ein Überlapp in den Überlappbereichen 73 und/oder 73a-e kann bspw. höchstens 50 %, höchstens 35 % oder höchstens 20 % der jeweiligen Teilbilder umfassen.

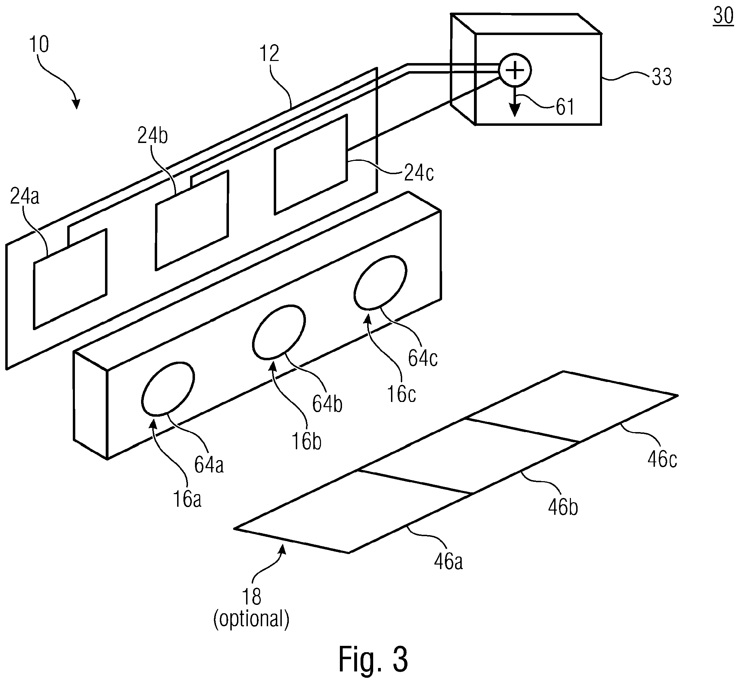

Fig. 3 zeigt eine schematische perspektivische Darstellung einer Multiaperturabbildungsvorrichtung 30 gemäß einem weiteren Ausführungsbeispiel, das die Multiaperturabbildungsvorrichtung 10 durch eine Berechnungseinheit 33 erweitert.

Die Berechnungseinheit 33 ist ausgebildet, um Bildinformationen von dem Bildsensor 12 zu erhalten, das bedeutet, Bildinformationen bezüglich der auf die Bildsensorbereiche 24a und 24c abgebildeten Teilgesichtsfelder, etwa die Teilgesichtsfelder 72a und 72b, sowie Bildinformationen des Gesamtgesichtsfelds, etwa des Gesamtgesichtsfelds 70, das auf den Bildsensorbereich 24b abgebildet werden kann. Die Berechnungseinheit 33 ist ausgebildet, um die Bildinformationen der Teilgesichtsfelder und die Bildinformationen des Gesamtgesichtsfelds miteinander zu kombinieren. Eine Kombination der Bildinformationen kann beispielsweise derart erfolgen, dass der Abtastgrad des Gesamtgesichtsfelds geringer ist als ein Abtastgrad der Teilgesichtsfelder. Unter Abtastgrad kann eine örtliche Auflösung des Teil- oder Gesamtgesichtsfeldes verstanden werden, das bedeutet, eine Größe die angibt, welche Oberfläche im Objektbereich auf welche Fläche oder Pixelgröße des Bildsensors abgebildet wird. In hierin beschriebenen Ausführungen ist mit dem Begriff Auflösung der Umfang des Teil- oder Gesamtgesichtsfeldes gemeint, der auf eine entsprechende Bildsensorfläche abgebildet wird. Eine vergleichsweise größere Auflösung bedeutet somit, dass ein konstanter Oberflächenbereich eines Gesichtsfeldes bei gleicher Pixelgröße auf eine größere Bildsensorfläche abgebildet wird, und/oder dass ein vergleichsweise kleinerer Objekt-Oberflächenbereich bei gleicher Pixelgröße auf eine konstante Bildsensorfläche abgebildet wird. Durch Kombination der Bildinformationen kann ein Abtastgrad und/oder eine Auflösung der kombinierten Bildinformation 61 gegenüber der Erfassung des Gesamtgesichtsfelds vergrößert sein.

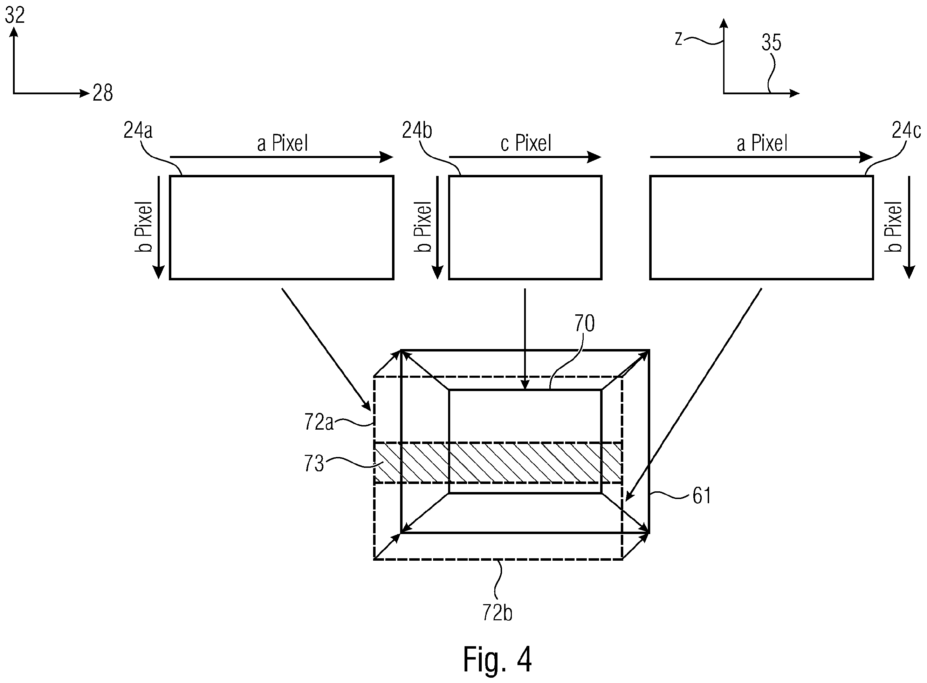

Fig. 4 zeigt eine schematische Darstellung von Bildsensorbereichen 24a-c wie sie beispielsweise in der Multiaperturabbildungsvorrichtung 10 oder 30 angeordnet sein können. Auf den Bildsensorbereich 24a wird beispielsweise das Teilgesichtsfeld 72a abgebildet. Das Teilgesichtsfeld 72b wird beispielsweise auf den Bildsensorbereich 24c abgebildet. Das Gesamtgesichtsfeld 70 wird beispielsweise auf den Bildsensorbereich 24b abgebildet. Die Anordnung der Teilgesichtsfelder 72a und 72b im Raum kann beispielsweise der Konfiguration gemäß Fig. 2b entsprechen.

Die Bildsensorbereiche 24a, 24b und 24c können entlang der Bildrichtung 32 eine gleiche oder innerhalb eines Toleranzbereichs von 20%, 10% oder 5% gleiche physikalische Ausdehnung b, die einer korrespondierenden Anzahl von Pixeln entsprechen kann, aufweisen. Entlang der Bildrichtung 28 können die Bildsensorbereiche 24a und 24c eine physikalische Ausdehnung a, die einer korrespondierenden Anzahl von a Pixeln entsprechen kann aufweisen. Die Ausdehnung oder Pixel a können entlang der Bildrichtung 28 größer sein als die Ausdehnung oder Anzahl von Pixeln c des Bildsensorbereichs 24b. Da die Teilgesichtsfelder 72a und 72b entlang der Bildrichtung 28 und verglichen mit dem Gesamtgesichtsfeld 70 gleich groß sind, findet eine Abtastung mit einer höheren Auflösung oder einem höheren Abtastgrad des Gesamtgesichtsfelds entlang der Bildrichtung 28 statt, das bedeutet, ein geringerer Bereich in dem Objektbereich wird auf ein Pixel konstanter Größe abgebildet, so dass die resultierende kombinatorische Auflösung bzw. der Abtastgrad vergrößert ist. Es kann ein Superresolutionseffekt implementiert werden, etwa wenn die Pixel der Abbildungen der Teilgesichtsfelder eine Subpixelversatz zueinander aufweisen.

Entlang der Bildrichtung 32 werden bspw. eine Anzahl von 2 x b Pixel genutzt, um das Gesamtgesichtsfeld 70 über die Teilgesichtsfelder 72a und 72b abzubilden, wobei hier der Überlappbereich 73 zu berücksichtigen ist. Durch die disjunkte oder lediglich teilweise Überlappung der Teilgesichtsfelder 72a und 72b resultiert aber auch entlang der Bildrichtung 32 eine verglichen mit der Erfassung des Gesamtgesichtsfelds 70 in dem Bildsensorbereich 24 vergrößerte Auflösung.

Die kombinierte Bildinformation des Gesamtgesichtsfelds 61 kann somit durch Kombination der Abbildungen in den Bildsensorbereichen 24a bis 24c verglichen mit der in dem Abbildungsbereich 24b erhaltenen Auflösung vergrößert sein. Ein Aspektverhältnis des Bildes in dem Bildsensorbereich 24b kann einen Wert von 3:4 aufweisen. Dies ermöglicht den Erhalt des kombinatorischen Bildes mit einem gleichen Aspektverhältnis. Eine Auflösung in den Bildsensorbereichen 24a und/oder 24c kann entlang der jeweiligen Bildrichtung und/oder im entstehenden Bild innerhalb eines Toleranzbereichs von 20 %, 10 % oder exakt um zumindest 30 %, zumindest 50 % oder zumindest 100 % größer sein, als in dem Bildsensorbereich 24b, wobei hier eine Ausdehnung des Überlappbereichs zu berücksichtigen ist.

Die Bildsensorbereiche 24a-c können entlang einer Zeilenerstreckungsrichtung 35 angeordnet sein, die beispielsweise parallel zu der Bildrichtung 28 angeordnet sein kann und/oder entlang derer die Optiken 64a-c der Multiaperturabbildungsvorrichtung 10 oder 30 angeordnet sein können. Entlang einer Richtung z senkrecht hierzu, die beispielsweise eine Dickenrichtung der Multiaperturabbildungsvorrichtung sein kann, können die Bildsensorbereiche 24a-c eine innerhalb des Toleranzbereichs gleiche Ausdehnung aufweisen, das bedeutet, die Auflösungserhöhung der Erfassung des Gesamtgesichtsfelds kann unter Vermeidung einer zusätzlichen Dicke der Multiaperturabbildungsvorrichtung erhalten werden.

In anderen Worten kann eine lineare symmetrische Anordnung von mindestens drei Kamera-Kanälen, d. h. optischen Kanälen, implementiert sein, wobei einer der optischen Kanäle, bevorzugt der mittlere optische Kanal, das gesamte Gesichtsfeld abdeckt und die (beiden) äußeren Kanäle jeweils nur einen Teil des Gesichtsfelds, etwa oben/unten oder links/rechts, so, dass sie zusammen auch das gesamte Gesichtsfeld abdecken und zusätzlich noch eine leichte Überlappung in der Mitte des Gesichtsfelds aufweisen können. Das bedeutet, links/rechts bzw. oben/unten können hochaufgelöste Teilbilder erhalten werden. In der Mitte wird ein geringer aufgelöstes Bild, welches das gesamte relevante Gesichtsfeld abdeckt, erfasst. Die Auflösung in dem mittleren Bild kann soweit reduziert sein, wie die entsprechend kürzere Brennweite für die gleiche Bildhöhe, d. h., ohne Berücksichtigung des Aspektverhältnisses, und die gleiche Pixelgröße es vorgibt oder es ermöglicht. Anders ausgedrückt, die Bildsensorhöhe 24a, 24b und 24c ist gleich. Ohne Überlapp ist daher die Bildhöhe in dem Bildsensorbereich 24b ca. halb so groß wie eine kombinierte Bildhöhe von 24a und 24c. Um das gleiche Gesichtsfeld abzubilden, kann daher die Brennweite (oder auch Vergrößerung) der Optik für den Bildsensorbereich 24b (optischer Kanal 16b) halb so lang bzw. groß sein wie die für 24a und 24c. Bei gleicher Pixelgröße bedeutet das halbe Auflösung (oder Abtastung des Gesichtsfeldes) in 24b gegenüber 24a und c kombiniert. Entsprechende Bildbreiten folgen einfach aus dem gewünschten Aspektverhältnis der Bilder.

Der mittlere Kamerakanal ist die Referenzkamera für die Tiefenkartenerzeugung, falls diese durch die Berechnungseinheit erstellt wird. Diese Anordnung umfassend die Symmetrie bezüglich des mittleren Kanals ermöglicht eine hohe Güte des erhaltenen kombinierten Gesamtbilds bezüglich der Okkultation bzw. Verdeckungen in der Tiefenkarte. Das mittlere Bild ist daher sinnvollerweise auch die Referenz für die Berechnung des höher aufgelösten kombinierten Bilds. In die niedrigaufgelöste Referenz werden die zumindest beiden höher aufgelösten Bilder blockweise eingesetzt. Sie dienen also als Material, das dann zum Einsatz kommen kann, wenn die Passgenauigkeit gewährleistet ist, das bedeutet, wenn übereinstimmende Merkmale in den Teilgesichtsfeldern und dem gesamten Gesichtsfeld gefunden werden. Das Einsetzen kann in sehr kleinen Blöcken erfolgen, so dass auch bei feinen Objekten mit großen Tiefensprüngen Probleme durch Parallaxe vermieden werden können. Die passenden Blöcke werden beispielsweise per Korrespondenz gesucht, was bedeuten kann, dass eine Disparitätskarte (Disparity Map) erzeugt wird, also eine Tiefenkarte. Falls aber für einen niedrigaufgelösten Block nicht mit ausreichender Sicherheit ein hochaufgelöster Block gefunden wird, hat dies keine katastrophalen Auswirkungen. Es wird einfach das niedrigaufgelöste Ursprungsbild belassen. Anders gesagt: Löcher in der Tiefenkarte führen lediglich zu unschärferen Stellen im Gesamtbild statt zu deutlich sichtbaren Artefakten.

In anderen Worten kann der mittlere Bildsensor durch kürzere Brennweite ein niedrigerer aufgelöstes Bild erfassen, das das gesamte Gesichtsfeld (Field of View - FOV) abdeckt und von Haus aus, d. h. nativ, das gewünschte Aspektverhältnis aufweist. Diese Kamera kann auch als Referenzkamera bezeichnet werden, beispielsweise da das erhaltene kombinierte Bild ihre Perspektive aufweist. Es erfolgt eine Zusammenfügung höher aufgelöster Teilbilder, die sich teilweise überlappen können und zusammengenommen ein gleiches Aspektverhältnis aufweisen, wie die Referenzkamera. Die Zusammenfügung der Bilder der Teilgesichtsfelder mit der Referenzkamera erlaubt ein äußerst korrektes Stitching im Überlappbereich, da dort zwar ein niedriger aufgelöstes, aber von Haus aus korrektes Bild vorliegt. Die Höhe aller drei Bildsensoren ist gemäß einer vorteilhaften Ausgestaltung gleich bzw. nahe an Gleichheit, um verfügbare Bauhöhen möglichst optimal auszunutzen. Alle Kameras können über einen gemeinsamen Spiegel (Strahlumlenkeinrichtung) umgelenkt werden. Eine Tiefenkarte kann bei Bedarf wie folgt berechnet werden. Im Überlappbereich 73 der beiden hochaufgelösten Teilbilder durch selbige sowie das niedrigaufgelöste Gesamtbild; in den übrigen Bereichen jeweils durch die Kombination eines der hochaufgelösten Teilbilder mit dem entsprechenden Abschnitt des niedrigaufgelösten Gesamtbilds.

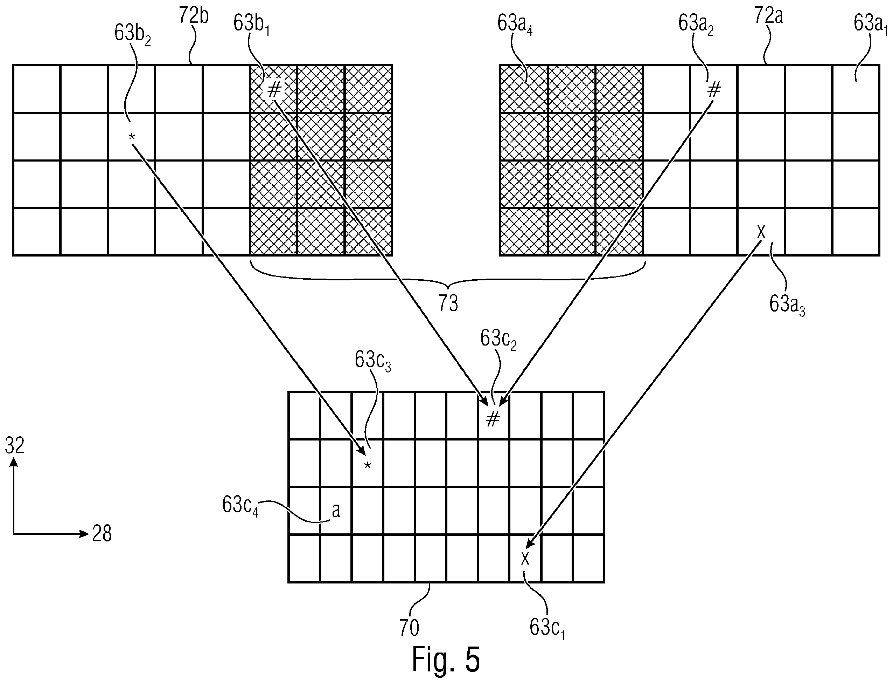

Fig. 5 zeigt eine schematische Darstellung einer möglichen Ausgestaltung der Berechnungseinheit 33. Die Berechnungseinheit 33 kann ausgebildet sein, um die Bildinformation des Gesamtgesichtsfelds 70 und die Bildinformationen der Teilgesichtsfelder 72a und 72b in Bildblöcke 63a des Teilgesichtsfelds 72a, 63b und des Teilgesichtsfelds 72b und 63c des Gesamtgesichtsfelds 70 aufzuteilen. Ein Bildblock kann entlang beider Bildrichtungen 28 und 32 eine bestimmte Anzahl von Pixeln aufwiesen. Die Blöcke können bspw. eine Größe entlang der Bildrichtung 28 und 32 von zumindest 2 und höchstens 1000 Pixeln, von zumindest 10 und höchstens 500 Pixeln oder von zumindest 20 und höchstens 100 Pixeln aufweisen.

Die Berechnungseinheit kann ausgebildet sein, um blockweise eine in einem Bildblock des Gesamtge-sichtsfelds enthaltene Bildinformation einer übereinstimmenden Bildinformation eines Bildblocks des ersten oder zweiten Teilgesichtsfelds 72a oder 72b zuzuordnen, um durch Kombination des ersten und zweiten Bildblocks eine Auflösung der Bildinformation des Gesamtgesichtsfelds in der kombinierten Bildinformation zu erhöhen. Der erste und der zweite Bildblock kann jeweils ein übereinstimmender Bildblock einer Abbildung unterschiedlicher Teilgesichtsfelder in einem Überlappungsbereich derselben sein. Alternativ oder zusätzlich kann der erste oder zweite Block ein Block des Gesamtbildes und der andere Block ein Block des Teilbildes sein. Die Berechnungseinheit 33 ist beispielsweise ausgebildet, um das in dem Block $63a_3$ mit x dargestellte Objekt als übereinstimmend mit dem Objekt x in dem Block 63c, des Gesamtgesichtsfelds 70 zu identifizieren. Basierend auf der verglichen mit dem Gesamtgesichtsfeld 70 höheren Auflösung des Teilgesichtsfelds 72a kann die Berechnungseinheit die Bildinformationen beider Blöcke $63a_3$ und $63c_1$ miteinander kombinieren, um die resultierende Auflösung in dem Block höher zu erhalten, als sie bezüglich des Gesamtgesichtsfelds ursprünglich war. Dabei kann die resultierende kombinatorische Auflösung dem Wert der Auflösung der Erfassung des Teilgesichtsfelds 72a entsprechen oder gar höher sein. Das mit # dargestellte Objekt in einem Block $63c_2$ des Gesamtgesichtsfelds 70 wird von der Berechnungseinheit beispielsweise in einem Block $63a_2$ des Teilgesichtsfelds 72a und in einem Block $63b_1$ des Teilgesichtsfelds 72b identifiziert, so dass zur Verbesserung der Bildqualität Bildinformationen aus beiden Abbildungen der Teilgesichtsfelder 72a und 72b herangezogen werden können.

Ein in einem Block $63c_3$ mit * dargestelltes Objekt wird von der Berechnungseinheit beispielsweise in einem Block $63b_2$ des Teilgesichtsfelds 72b identifiziert, so dass die Bildinformationen des Blocks $63b_2$ von der Berechnungseinheit beispielsweise genutzt werden, um die Bildinformation in dem Block $63c_3$ zu erhöhen.

In einem Fall, in dem kein Block der Teilgesichtsfelder 72a und 72b einem Block des Gesamtgesichtsfelds zugeordnet werden kann, wie es beispielsweise für den Block $63c_4$ dargestellt ist, kann die Berechnungseinheit ausgebildet sein, um einen Block des kombinierten Gesamtbildes so auszugeben, das zumindest der Block $63c_4$ in dem Gesamtbild angeordnet ist. D. h., es kann eine Bildinformation dargestellt werden, auch wenn lokal keine Erhöhung der Auflösung erfolgt. Dies führt zu höchstens geringfügigen Änderungen in dem Gesamtbild, das bedeutet, am Ort des Blocks $63c_4$ ist beispielsweise eine lokal reduzierte Auflösung vorhanden.

Die Berechnungseinheit 33 kann ausgebildet sein, um ein Stitching der Bildinformationen der Teilgesichtsfelder 72a und 72b basierend auf der Bildinformation des Gesamtgesichtsfelds 70 auszuführen. Das bedeutet, dass die Gesamtabbildung des Gesamtgesichtsfelds genutzt werden kann, um eine Ausrichtung der Teilbilder der Teilgesichtsfelder 72a und 72b zueinander zumindest zu unterstützen oder gar auszuführen. Alternativ oder zusätzlich kann die Information aus der Gesamtabbildung des Gesamtgesichtsfelds genutzt werden um die die Anordnung der Objekte der Szene aus den Teilbildern und/oder in einem Teilbild innerhalb des Gesamtbilds zu unterstützen oder gar auszuführen. Das Gesamtgesichtsfeld weist eine hohe Anzahl oder gar alle Objekte auf, die auch in den Teilgesichtsfeldern 72a und 72b dargestellt sind, so dass ein Vergleich der jeweiligen Teilbilder mit dem Gesamtbild des Gesamtgesichtsfelds und/oder ein Vergleich der Position des Objekts eine Ausrichtung an dem Gesamtbild ermöglicht und somit ein Stitching der Teilbilder untereinander ermöglicht.

In andern Worten liefert das niedrigaufgelöste Bild immer prior eine Grundlage zur Unterstützung des Stitchings der hochaufgelösten Bilder, das bedeutet, eine Orientierungsgrundlage, da Objekte in dem Gesamtbild schon verbunden vorliegen. Stitching kann neben einer einfachen Aneinanderfügung zweier globaler Teilbildbereiche auch bedeuten, dass Objekte je nach ihrem Abstand in einem gestitchten Bild anders (hinsichtlich ihrer lateralen Position im Bild) wieder in die Szene bzw. vor den Hintergrund eingeordnet werden, was je nach abstandsmäßiger Objektverteilung in der Szene erforderlich oder gewünscht sein kann. Die hierin beschriebenen Konzepte vereinfachen den Stitching-Prozess erheblich, selbst wenn eine Tiefenkarte für exaktes Stitching notwendig sein sollte. Okkultationsprobleme durch eine fehlende Kamera in der Mittenposition können vermieden werden, da zumindest drei optische Kanäle zumindest drei Blickrichtungen hin zu dem Gesamtgesichtsfeld ermöglichen. Eine Verdeckung in einem Blickwinkel kann so durch ein oder zwei andere Blickwinkel reduziert oder verhindert werden.

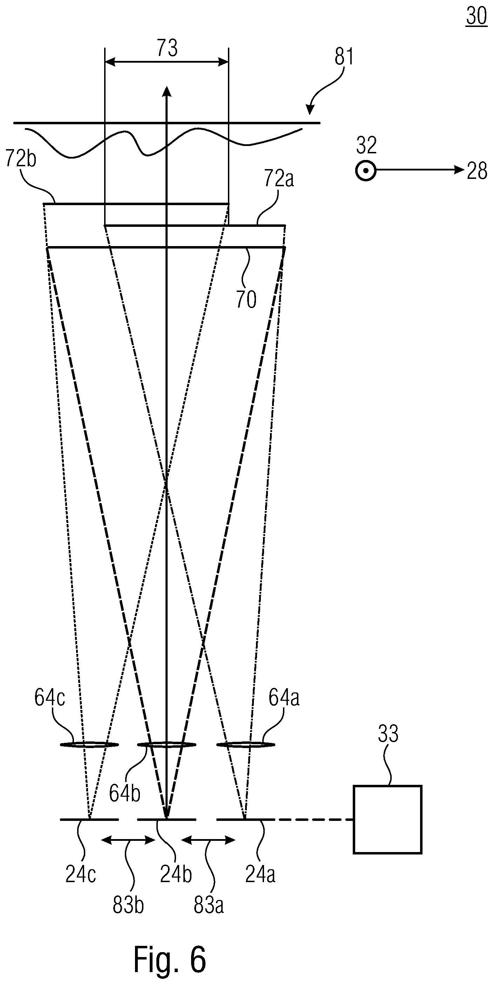

Fig. 6 zeigt eine schematische Aufsicht auf die Multiaperturabbildungsvorrichtung 30 gemäß einem Ausführungsbeispiel. Die Berechnungseinheit 33 kann ausgebildet sein, um eine Tiefenkarte 81 zu erstellen. Die Tiefenkarte 81 kann sich dabei auf die Bildinformation des Gesamtgesichtsfelds 70 beziehen. Die Berechnungseinheit 33 ist beispielsweise ausgebildet, um Disparitäten 83a zwischen den Abbildungen des Teilgesichtsfelds 72a und des Gesamtgesichtsfelds 70 und 73b und zwischen den Abbildungen des Teilgesichtsfelds 72b und dem Gesamtgesichtsfeld 70 auszunutzen um eine Tiefenkarte zu erstellen. Das bedeutet, dass durch die physikalische Beabstandung der Optiken 64a, 64b und 64c sowie der Bildsensorbereiche 24a, 24b und 24c unterschiedliche Blickwinkel bzw. Perspektiven erhalten werden, die für die Erstellen der Tiefenkarte 81 durch die Berechnungseinheit 33 genutzt werden. Die Berechnungseinheit 33 kann ausgebildet sein, um in dem Überlappbereich 73, in dem sich die Teilgesichtsfelder 72a und 72b überlappen, die Tiefenkarte 81 unter Verwendung der Bildinformationen der Teilgesichtsfelder 72a und 72b zu erstellen. Dies ermöglicht die Verwendung einer verglichen mit den Einzeldisparitäten 83a und 83b größeren Disparität, vereinfacht der Summe der Einzeldisparitäten, sowie die Verwendung der hochaufgelösten (Teil-)Bilder. Das bedeutet, in einem Ausführungsbeispiel kann die Berechnungseinheit 33 ausgebildet sein, um die Tiefenkarte 81 in dem Überlappbereich 73 ohne die Informationen des Gesamtgesichtsfelds 70, das auf den Bildsensorbereich 24b abgebildet wird, zu erstellen. Alternativ ist eine Verwendung der Information des Gesamtgesichtsfeldes 70 in dem Überlappbereich 73 möglich und bspw. für eine hohe Informationsdichte vorteilhaft.

Die Abbildungen in den Bildsensorbereichen 24a und 24c können gemäß einer vorteilhaften Weiterbildung ohne die Verwendung von (z.B. RGB-)Bayer-Farbfilter-Anordnungen wie in 24b oder zumindest unter Verwendung einheitlicher Farbfilter erfolgen, so dass die abgebildeten ersten und zweiten Teilgesichtsfelder mit einer farbeinheitlichen Luminanzinformation von der Multiaperturabbildungsvorrichtung bereitgestellt werden. So kann beispielsweise ein farbeinheitliches Infrarot-Filter, Ultraviolett-Filter, Rot-Filter, Blau-Filter oder dergleichen oder eben gar kein Filter angeordnet sein, während ein mehrfarbiges Filter wie etwa eine Bayer-Anordnung wie in 24b nicht angeordnet ist. In anderen Worten, da die äußeren Kanäle nur Detail beitragen, um die Qualität des Bilds des Gesamtgesichtsfelds zu erhöhen, kann es vorteilhaft sein, wenn die äußeren Kanäle 16a und 16c keine Farbfilter aufweisen. Die äußeren Kanäle tragen dann zwar nur Luminanz-Informationen bei, also höhere generelle Schärfe/Details und keine bessere Farbinformation, der Vorteil, der damit erhalten wird, liegt in der höheren Empfindlichkeit und damit in einem geringeren Rauschen, was seinerseits letztlich auch eine bessere Auflösung bzw. Schärfe ermöglicht, da das Bild weniger zu glätten ist, da beispielsweise kein Bayer-Farbfilter-Muster über den Pixeln liegt, die Auflösung in den reinen Luminanz-Kanälen ist aber von Haus aus auch schon höher (idealerweise fast doppelt so hoch), da kein de-Bayering mehr notwendig ist. Effektiv kann ein Farb-Pixel ca. doppelt so groß sein, wie ein Schwarz-Weiß Pixel. Physisch gegebenenfalls nicht, denn hier können Schwarz/Weiß-Pixel nicht nur für Auflösung genutzt werden, sondern auch für Farb-Diskriminierung durch Überlagerung von Schwarz/Weiß-Pixeln mit dem typischen RGBG Filtermuster.

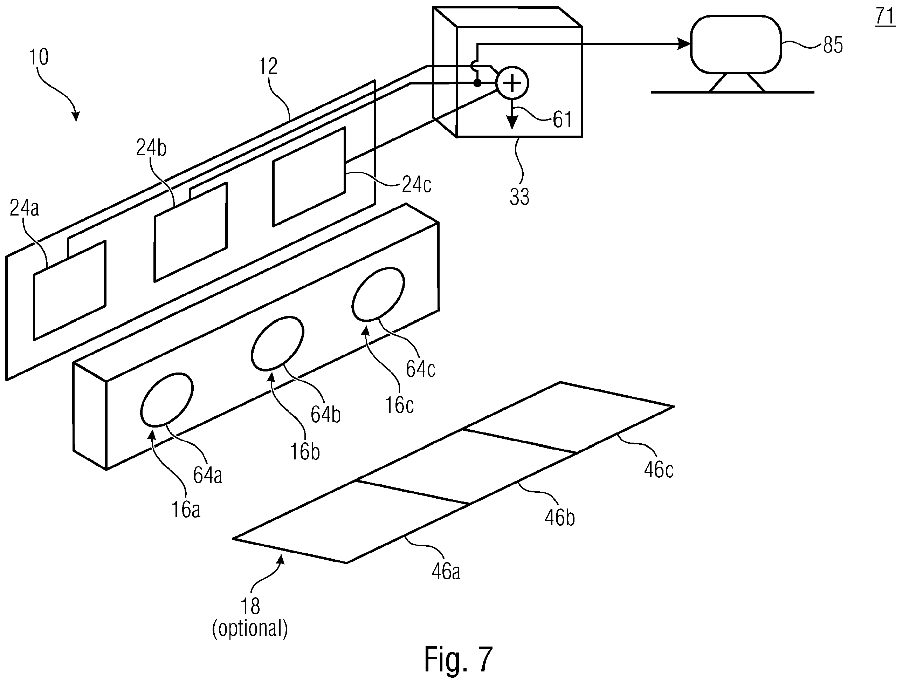

Fig. 7 zeigt eine schematische perspektivische Ansicht einer Multiaperturabbildungsvorrichtung 71 gemäß einem weiteren Ausführungsbeispiel, die eine Anzeigeeinrichtung 85 umfasst. Die Multiaperturabbildungsvorrichtung 71 ist ausgebildet, um die Darstellung des auf den Bildsensorbereich 24b abgebildeten Gesamtgesichtsfelds 70 mit der Anzeigeeinrichtung 85 wiederzugeben. Hierfür kann beispielsweise die Berechnungseinheit 33 ausgebildet sein, um das entsprechende Signal vom Bildsensor 12 an die Anzeigeeinrichtung 85 weiterzuleiten. Alternativ kann die Anzeigeeinrichtung 85 auch direkt mit dem Bildsensor 12 gekoppelt sein und das entsprechende Signal von dem Bildsensor 12 erhalten.

Die Anzeigeeinrichtung 85 ist ausgebildet, um die Bildinformation des Gesamtgesichtsfelds mit höchstens der Auflösung zu empfangen und auszugeben, die von dem Bildsensorbereich 24b bereitgestellt wird. Bevorzugt wird die Auflösung des auf den Bildsensorbereich 24b abgebildeten Gesamtgesichtsfelds unverändert an die Anzeigeeinrichtung 85 weitergegeben. Das ermöglicht eine Anzeige des möglicherweise gegenwärtig aufgenommenen Bilds oder Videos, etwa als Vorschau für einen Benutzer, so dass dieser die Aufnahme beeinflussen kann. Die höher aufgelösten Bilder, die durch die kombinierte Bildinformation 61 bereitgestellt werden, können zu einem anderen Zeitpunkt der Anzeigeeinrichtung 85 bereitgestellt werden, einer anderen Anzeigeeinrichtung bereitgestellt werden, gespeichert oder übertragen werden. Auch ist es möglich, die kombinierte Bildinformation 61 zeitweise, d. h. nur bei Bedarf, zu erhalten und ansonsten das gegebenenfalls niedriger aufgelöste Bild des Gesamtgesichtsfelds 70 zu nutzen, wenn dies für die gegenwärtige Benutzung ausreichend ist, etwa eine Betrachtung in der Anzeigevorrichtung 85, ohne dass eine Tiefenkarte benötigt wird oder auf ein Hineinzoomen in Details verzichtet wird. Dies ermöglicht eine Einflussnahme auf die Bilderfassung ohne rechen- und zeitaufwändige Kombination der Bildsignale, was sich vorteilhaft auf die Verzögerung in der Anzeigeeinrichtung 85 und den Energiebedarf für die Berechnungen auswirkt. Durch Aneinanderreihen mehrerer Bilder durch die Multiaperturabbildungsvorrichtung 71 kann auch ein Videosignal von dem Bildsensor 12 erhalten werden und ein Videosignal des Gesamtgesichtsfelds auf der Anzeigeeinrichtung 85 ausgegeben werden.

Beispielsweise kann die Multiaperturabbildungsvorrichtung 71 aber auch eine andere hierin beschriebene Multiaperturabbildungsvorrichtung, etwa die Multiaperturabbildungsvorrichtung 10, 30 oder 60 als Mobiltelefon, als Smartphone, als Tablet oder als Monitor gebildet sein.

Die Multiaperturabbildungsvorrichtung 71 kann eine Echtzeit-Vorschau auf dem Display 85 bereitstellen, die beiden äußeren Kamerakanäle müssen also nicht immer aktiviert werden, so dass Strom gespart werden kann und/oder dass kein zusätzlicher Rechenaufwand für die Verknüpfung der Teilbilder erforderlich ist, was eine reduzierte Prozessorauslastung und einen reduzierten Energieverbrauch ermöglicht, was auch eine längere Batterielaufzeit ermöglicht. Alternativ oder zusätzlich können vorerst Rohdaten gespeichert werden und ein hochaufgelöstes Bild erst bei einer Übertragung auf eine andere Recheneinheit wie einen PC und/oder bei einer Betrachtung auf dem Anzeigegerät mit Zoom in die Details generiert werden. Hierbei ist es möglich, das kombinatorische Bild gegebenenfalls nur für relevante Bildbereiche zu erstellen oder für irrelevante Bildbereiche das kombinatorische Bild zumindest bereichsweise nicht zu erstellen. Relevante Bereiche können bspw. Bildbereiche sein, für die eine vergrößerte Darstellung (Zoom) erwünscht ist.

Sowohl für Einzelbilder als auch für ein Video ist das Bild des Bildsensorbereichs 24b also direkt verwendbar und hat gegebenenfalls ausreichende Auflösung für ein Video. Es ist ebenfalls vorstellbar, dass die mittlere Kamera gleich in passender Auflösung für gängige Video-Formate bereitgestellt werden, also etwa 1080p oder 4K, so dass sonst übliches Resampling (Abtastratenkonvertierung), Binning (Zusammenfassen benachbarter Bildelemente) oder Skipping (Überspringen von Pixeln) vermieden werden kann, wobei die Auflösung so hoch sein kann, dass hochaufgelöste Standbilder erzeugt werden können.

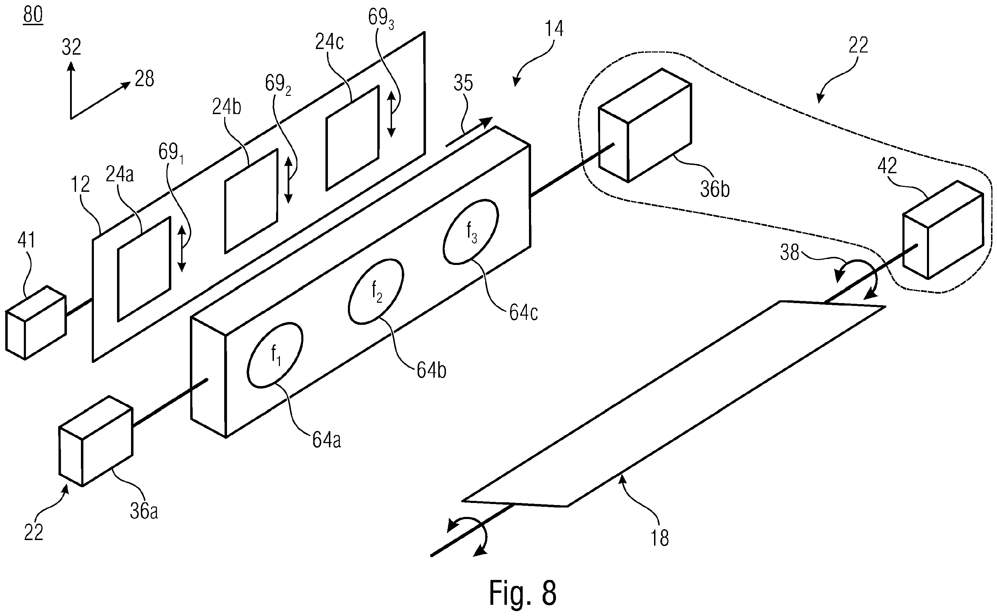

Fig. 8 zeigt eine schematische perspektivische Ansicht einer Multiaperturabbildungsvorrichtung 80, die einen optischen Bildstabilisator 22 und einen elektronischen Bildstabilisator 41 aufweist. Die nachfolgend beschriebenen Aspekte zur Bildstabilisierung sind ohne Einschränkungen mit den Funktionalitäten der Berechnungseinheit 33, einzeln oder in Kombination miteinander, realisierbar.

Der optische Bildstabilisator 22 umfasst bspw. Aktoren 36a, 36b und 42, wobei die Aktoren 36a und 36b ausgebildet sind, um die optische Bildstabilisierung der Abbildungen der Teilgesichtsfelder in den Bildsensorbereichen 24a bis 24c durch eine Verschiebung des Arrays 14 entlang der Zeilenerstreckungsrichtung 35 zu erreichen. Ferner ist der optische Bildstabilisator 22 bspw. ausgebildet, um eine optische Bildstabilisierung entlang der Bildachse 32 durch eine Rotationsbewegung 38 der Strahlumlenkeinrichtung 18 zu erhalten. Bspw. weisen die Optiken 64a und 64b des Arrays 14 eine innerhalb eines Toleranzbereichs von höchstens 10 %, höchstens 5 % oder höchstens 3 % von einander verschiedene effektive Brennweite $f_1$ bzw. $f_3$ auf, um die Teilgesichtsfelder in etwa gleich zu erfassen. Die Optik 64b kann eine Brennweite $f_2$ aufweisen, die um zumindest 10 % hiervon verscheiden ist. Die kanalglobale Rotationsbewegung 38 führt im Zusammenspiel mit unterschiedlichen Brennweiten $f_2$ und $f_1$ bzw. innerhalb der Brennweitenunterschiede zwischen $f_1$ und $f_3$ zu einer unterschiedlichen Verschiebung $69_1$ bis $69_3$ der Abbilder in den Bildsensorbereichen 24a-c. Das bedeutet, dass der optische Bildstabilisator 22 durch die kanalglobale Rotationsbewegung 38 unterschiedliche Effekte in den Abbildungen erzielt, so dass zumindest eine, mehrere oder alle Abbildungen von einem theoretischen fehlerfreien Zustand abweichen. Der optische Bildstabilisator 22 kann ausgebildet sein, um die Abweichungen aller Bilder global zu minimieren, was jedoch dazu führen kann, dass in jedem der Abbilder Fehler entstehen. Alternativ kann der optische Bildstabilisator 22 ausgebildet sein, um eine Referenzabbildung in einem der Bildsensorbereiche 24a-d auszuwählen und die Steuerung des Aktors 42 so auszuführen, dass die Abbildung in dem Referenzabbild oder Referenzkanal möglichst exakt ist, was auch als fehlerfrei bezeichnet werden kann. Das bedeutet, dass durch die kanalglobale optische Bildstabilisierung ein Kanal bezogen auf die beeinflusste Bildrichtung fehlerfrei gehalten werden kann, während die anderen Kanäle bedingt durch die unterschiedlichen Brennweiten $f_1$ bis $f_3$ von dieser Referenzabbildung abweichen. In anderen Worten, wird ein Kanal mit dem mechanischen realisierten optischen Bildstabilisator korrigiert, der für alle Kanäle eine Wirkung entfaltet, jedoch nicht alle Kanäle stabil hält. Diese weiteren Kanäle werden mit dem elektronischen Bildstabilisator zusätzlich korrigiert.

Der optische Bildstabilisator kann ausgebildet sein, um die Relativbewegungen für die optischen Kanäle kanalindividuell bereitzustellen und/oder individuell für Gruppen von optischen Kanälen, etwa für die Gruppe der optischen Kanäle 16a und 16c zur Erfassung der Teilgesichtsfelder und für die Gruppe umfassend den optischen Kanal 16b zur Erfassung des Gesamtgesichtsfeldes.

Der elektronische Bildstabilisator 41 kann ausgebildet sein, um eine kanalindividuelle elektronische Bildstabilisierung in jedem Kanal nach einem festgelegten funktionellen Zusammenhang auszuführen, der von den Relativbewegungen zwischen dem Bildsensor 12, dem Array 14 und der Strahlumlenkeinrichtung 18 abhängt. Der elektronische Bildstabilisator 41 kann ausgebildet sein, um jede Abbildung einzeln und individuell zu stabilisieren. Der elektronische Bildstabilisator 41 kann hierfür globale Werte nutzen, etwa die Kamerabewegung oder dergleichen, um die optische Qualität der Bilder zu erhöhen. Besonders vorteilhaft ist es, wenn der elektronische Bildstabilisator 41 ausgebildet ist, um eine elektronische Bildkorrektur ausgehend von einer Referenzabbildung des optischen Bildstabilisators 22 auszuführen. Die unterschiedlichen Brennweiten können den funktionellen Zusammenhang zwischen den unterschiedlichen Änderungen in den Abbildungen durch die optische Bildstabilisierung in bevorzugt linearer Form bereitstellen, etwa in der Form:

$$\text{Abbildungsfehler} = f(f_i, \text{Relativbewegung}),$$

das bedeutet, der Abbildungsfehler global oder bezogen auf den Referenzkanal ist darstellbar als Funktion der Brennweite oder Brennweitenunterschiede und der ausgeführten Relativbewegung zum Wechsel der Blickrichtung oder zur optischen Bildstabilisierung. Der elektronische Bildstabilisator 41 kann ein Ausmaß der Relativbewegung zwischen Bildsensor 12, Array 14 und Strahlumlenkeinrichtung 18 mit den Brennweiten $f_1$ bis $f_3$ oder Brennweitendifferenzen bezogen auf den Referenzkanal verknüpfen, um eine zuverlässige Information über die auszuführende elektronische Bildstabilisierung zu erhalten, und, um den funktionellen Zusammenhang herzustellen und/oder auszunutzen. Die erforderlichen Daten der optischen Eigenschaften und/oder des funktionellen Zusammenhangs können während einer Kalibrierung gewonnen werden. Die Ausrichtung von Bildern an einander zum Bestimmen einer Verschiebung eines Bildes gegenüber einem anderen Bild kann auch durch Bestimmen eines übereinstimmendes Merkmals in den Abbildern der Teilgesichtsfelder erfolgen, etwa Kantenverläufe, Objektgrößen oder dergleichen. Dies kann bspw. durch den elektronischen Bildstabilisator 41 identifiziert werden, der ferner ausgebildet sein kann um die elektronische Bildstabilisierung basierend auf einem Vergleich von Bewegungen des Merkmals in dem ersten und zweiten Abbild bereitzustellen. Die kanalindividuelle elektronische Bildstabilisierung kann somit durch eine kanalindividuelle Bildauswertung der Bewegung von Bilddetails erfolgen.

Alternativ oder zusätzlich zu einem Vergleich in unterschiedlichen Bildern kann auch ein Vergleich des Merkmals innerhalb desselben Bildes erfolgen, insbesondere zu zwei zeitlich beabstandeten Aufnahmen oder Frames. Der optische Bildstabilisator 41 kann ausgebildet sein, um in dem entsprechenden Teilbild zu einem ersten Zeitpunkt und zu einem zweiten Zeitpunkt ein übereinstimmendes Merkmal zu identifizieren, und um die elektronische Bildstabilisierung basierend auf einem Vergleich von Bewegungen des Merkmals in dem ersten Abbild bereitzustellen. Der Vergleich kann bspw. eine Verschiebung angeben, um die das Merkmal durch eine Relativbewegung verschoben wurde und um die das Bild zurückzuschieben ist, um den Bildfehler zumindest teilweise zu korrigieren.

Der optische Bildstabilisator kann genutzt werden, um ein Abbild des abgebildeten Teilgesichtsfeldes eines Referenzkanals, etwa das Abbild im Bildsensorbereich 24a, zu stabilisieren. Das bedeutet, der Referenzkanal kann vollständig optisch stabilisiert werden. Gemäß Ausführungsformen kann eine Mehrzahl von optischen Bildstabilisatoren angeordnet sein, die eine optische Bildstabilisierung für zumindest Gruppen von optischen Kanälen bereitstellen, etwa den optischen Kanal oder optische Kanäle mit einer ersten Brennweite, wie der optische Kanal zur Abbildung des Gesamtgesichtsfeldes und optische Kanäle mit einer zweiten Brennweite, etwa zur Abbildung der Teilgesichtsfelder. Alternativ kann auch eine kanalindividuelle optische Bildstabilisierung vorgesehen sein. Der elektronische Bildstabilisator 41 ist bspw. ausgebildet, um eine Bildstabilisierung kanalindividuell für von dem Referenzkanal verschiedene optische Kanäle, die auf die Bildsensorbereiche 24b und 24c abbilden, auszuführen. Die Multiaperturabbildungsvorrichtung kann ausgebildet sein, um den Referenzkanal ausschließlich optisch zu stabilisieren. Das bedeutet, in einer Ausführungsform kann eine ausreichend gute Bildstabilisierung in dem Referenzkanal erreicht werden, indem allein die mechanisch erzielte optische Bildstabilisierung genutzt wird. Für die anderen Kanäle erfolgt zusätzlich eine elektronische Bildstabilisierung, um den zuvor beschriebenen Effekt einer unzureichenden optischen Bildstabilisierung infolge Brennweitenunterschiede teilweise oder vollständig zu kompensieren, wobei die elektronische Stabilisierung in jedem Kanal individuell erfolgt.

Gemäß einer weiteren Ausführungsform ist es weiterhin möglich, dass jeder Kanal der Multiaperturabbildungsvorrichtung über eine individuelle elektronische Bildstabilisierung verfügt. Die für jeden Kanal der Multiaperturabbildungsvorrichtung individuell, d. h. in eigenem Umfang, durchgeführte elektronische Bildstabilisierung kann dabei derart erfolgen, dass ein festgelegter funktionaler Zusammenhang zwischen den zu realisierenden Bildverschiebungen in den einzelnen Kanälen ausgenutzt wird. Beispielsweise beträgt die Verschiebung entlang der Richtung 32 in einem Kanal das 1,1-fache, das 1,007-fache, das 1,3-fachen oder das 2 oder 5-fache der Verschiebung entlang der Richtung 32 in einer anderen Abbildung. Weiterhin kann dieser kanalindividuelle funktionale Zusammenhang von den Relativbewegungen zwischen Strahlumlenkeinheit und/oder Array und/oder Bildsensor abhängen, wobei dieser linear sein kann oder einer Winkelfunktion entsprechen kann, die einen Rotationswinkel der Strahlumlenkeinrichtung auf einen Umfang der elektronischen Bildstabilisierung entlang der Bildrichtung abbildet. Ein identischer Zusammenhang kann mit gleichen oder unterschiedlichen Zahlenwerten für die Richtung 28 erhalten werden.

Für alle Ausführungsformen gilt, das die realisierten Relativbewegungen von entsprechenden zusätzlichen Sensoren, wie Gyroskope u.a., erfasst werden oder von den aufgenommenen Bilddaten eines, mehrerer oder aller Kanäle abgeleitet werden können. Diese Daten oder Informationen können für den optischen und/oder elektronischen Bildstabilisator genutzt werden, das bedeutet, dass die Multiaperturabbildungsvorrichtung bspw. ausgebildet ist, um ein Sensorsignal von einem Sensor zu empfangen, und um das Sensorsignal bezüglich einer Information, die mit einer Relativbewegung zwischen der Multiaperturabbildungsvorrichtung und dem Objekt korreliert ist, auszuwerten, und um eine Ansteuerung des optischen und/oder elektronischen Bildstabilisators unter Verwendung dieser Information auszuführen.

Der optische Bildstabilisator kann ausgebildet sein, um die optische Bildstabilisierung entlang der Bildachsen 28 und 32 durch Bewegung unterschiedlicher Komponenten zu erhalten, etwa des Arrays 14 für die Stabilisierung entlang der Richtung 28 und die Rotation 38 der Strahlumlenkeinrichtung 18 für die Stabilisierung entlang der Richtung 32. In beiden Fällen wirken sich Unterschiede in den Optiken 64a-c aus. Die vorangehenden Ausführungen bezüglich der elektronischen Bildstabilisierung können für beide Relativbewegungen implementiert werden. Insbesondere ermöglicht eine Betrachtung der Richtungen 28 und 32 getrennt voneinander eine Berücksichtigung von unterschiedlichen Abweichungen zwischen den Optiken 64a-c entlang der Richtungen 28 und 32.

Hierin beschriebene Ausführungsbeispiele können eine gemeinsame Bildachse 28 und/oder 32 für die Teilbilder in den Bildsensorbereichen 24a-c nutzen. Alternativ können sich die Richtungen auch unterscheiden und in einander umgerechnet werden.

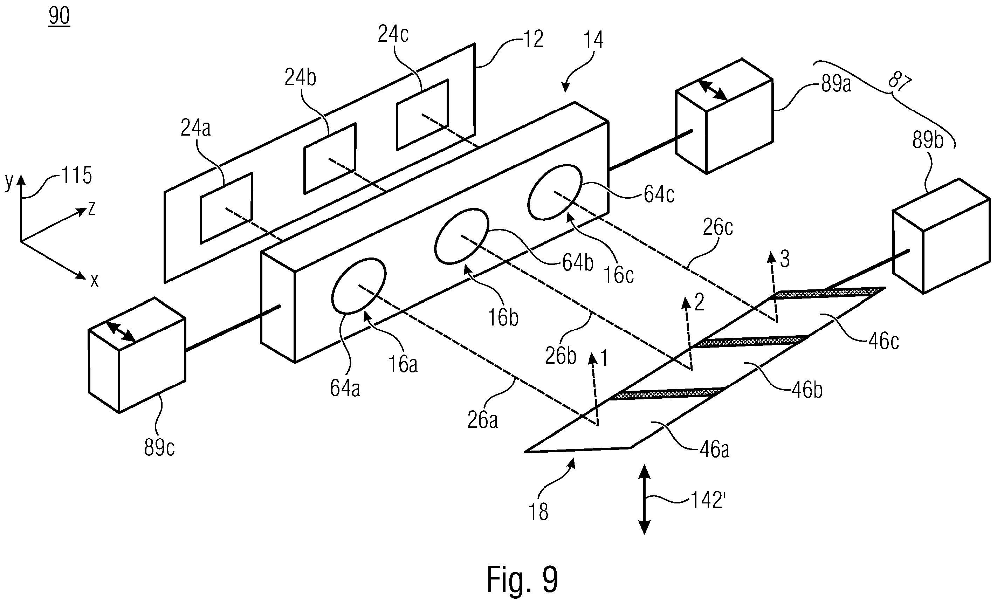

Fig. 9 zeigt eine schematische perspektivische Ansicht einer Multiaperturabbildungsvorrichtung 90 gemäß einem weiteren Ausführungsbeispiel, die eine Fokussiereinrichtung 87 umfasst. Die Fokussiereinrichtung 87 kann einen oder mehrere Aktoren 89a, 89b und/oder 89c umfassen, die ausgebildet sind, um einen Abstand zwischen dem Array 14 und dem Bildsensor 12 und/oder der Strahlumlenkeinrichtung 18 und dem Array 14 und/oder der Strahlumlenkeinrichtung 18 und dem Bildsensor 12 zu verändern, um eine Fokussierung der Abbildungen auf die Bildsensorbereiche 24a, 24b und/oder 24c einzustellen. Obwohl die Optiken 64a, 64b und 64c so dargestellt sind, dass sie an einem gemeinsamen Träger angeordnet sind, um gemeinsam bewegbar zu sein, kann zumindest die Optik 64b, der Bildsensorbereiche 24b und/oder der Strahlumlenkbereich 46b individuell bewegt werden, um eine Fokussierung für den optischen Kanal 16b verschieden von einer Fokussierung in anderen Kanälen einzustellen. Das bedeutet, dass die Fokussiereinrichtung 87 ausgebildet sein kann, um eine Relativbewegung für den ersten und zweiten optischen Kanal 16a und 16c und eine Relativbewegung für den optischen Kanal 16b voneinander verschieden einzustellen.

Die Fokussiereinrichtung 87 ist mit dem optischen Bildstabilisator 22 kombinierbar, das bedeutet, eine Bewegung, die sowohl in dem optischen Bildstabilisator 22 als auch in der Fokussiereinrichtung 87 durch Aktuatoren bereitgestellt wird, kann durch zusätzlich angeordnete Aktuatoren bereitgestellt werden oder auch durch einen gemeinsamen Aktuator, der Bewegungen zwischen Komponenten sowohl zur Fokussierung als auch zur optischen Bildstabilisierung bereitstellt.

In anderen Worten ist eine Verwendung von getrennten Aktuatoren für Autofokus (AF) und gegebenenfalls optische Bildstabilisierung (Optical Image Stabilisation - OIS) vorteilhaft. Aufgrund des möglicherweise ungleichen Aufbaus der benachbarten Kanäle in Bezug auf Auflösung und Brennweite kann eine kanalindividuelle Aktuatorik ermöglichen, eine kanalindividuelle Einstellung zu erhalten, so dass die Vorteile der Autofokussierung und/oder der Bildstabilisierung in allen Kanälen erhalten werden.. So werden beispielsweise für die Funktion des Autofokus bei verschiedenen Brennweiten verschiedene bildseitige Wegstrecken zur Fokussierung benötigt, um diese mit hoher Qualität auszuführen. Alternative Aufbauformen können so ausgeführt sein, dass der optische Kanal, der konfiguriert ist, um das Gesamtgesichtsfeld zu erfassen, ohne eine Strahlumlenkeinrichtung ausgeführt wird.

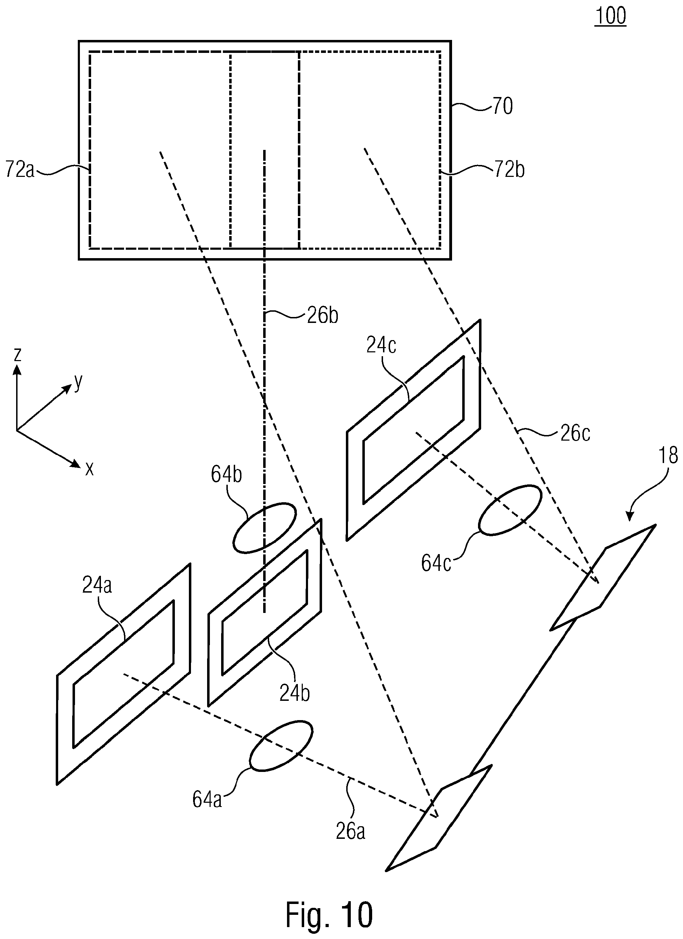

Fig. 10 zeigt eine schematische perspektivische Darstellung einer Multiaperturabbildungsvorrichtung 100 gemäß einem weiteren Ausführungsbeispiel, bei dem die Bildsensorbereiche 24a bis 24c auf zumindest zwei voneinander verschiedenen Chips angeordnet sind und gegeneinander orientiert, d. h., geneigt sind. Der Bildsensorbereichen 24b kann in Kombination mit der Optik 64b eine erste Blickrichtung gegebenenfalls direkt hin zu dem Gesamtgesichtsfeld 70 aufweisen. Die Bildsensorbereiche 24a und 24c können in Kombination mit den ihnen zugeordneten Optiken 64a und 64c eine hiervon verschiedene Blickrichtung aufweisen, beispielsweise senkrecht hierzu entlang einer x-Richtung, wobei die Strahlengänge 26a und 26c von der Strahlumlenkeinrichtung 18 hin zu den Teilgesichtsfeldern 72a und 72b umgelenkt werden. Dies stellt eine gegenüber den vorangehend beschriebenen Multiaperturabbildungsvorrichtungen alternative Aufbauform dar.

Die Verwendung der Strahlumlenkeinrichtung 18 kann zu einer gewissen Spiegelgröße oder Umlenkflächengröße führen, die für den Kanal 24b größer ausfallen kann als für die benachbarten Kanäle zur Erfassung der Teilgesichtsfelder, da der Kanal 16b immerhin das verglichen mit den Teilgesichtsfeldern 72a und 72b größere Gesamtgesichtsfeld zu erfassen hat. Dies kann zu einer Vergrößerung entlang einer Dickenrichtung der Vorrichtung, beispielsweise eine z-Richtung führen, was in manchen Ausführungsformen unerwünscht ist. Die Verwendung der Strahlumlenkeinrichtung 18 kann deshalb so umgestaltet werden, dass lediglich die Strahlengänge 26a und 26c umgelenkt werden, während der Strahlengang 26b direkt, d. h. ohne Umlenkung, hin zu dem Gesamtgesichtsfeld 70 gelenkt wird.

In anderen Worten wird der mittlere Kamerakanal ohne Umlenkspiegel also in klassischer Orientierung direkt aus der Ebene der Vorrichtung, beispielsweise ein Telefon, herausblickend mittig zwischen die beiden umgelenkten Kamerakanäle höherer Auflösung eingebaut. Aufgrund der niedrigeren Auflösung, bspw. ein Wert von 0,77 bzw. 1/1,3, 0,66 bzw. 1/1,5 oder 0,5 bzw. 1/2, was einer oben beschriebenen höheren Auflösung der Zusatzkanäle von zumindest 30 %, zumindest 50 % oder zumindest 100 % entspricht, und entsprechend geringerer Brennweite weist der mittlere Kamerakanal in einer derartig stehenden Konfiguration eine in etwa gleiche Bauhöhe entlang der z-Richtung auf wie die beiden äußeren Kamerakanäle liegend. Diese Lösung kann zwar gegebenenfalls eine Umschaltung der Blickrichtung des mittleren Kanals 16b verhindern, kann aber durch eine möglicherweise weitere Anordnung eines zusätzlichen Kamerakanals kompensiert werden. Die Anordnung einer Autofokusfunktion und/oder einer optischen Bildstabilisierung kann durch individuelle Anordnung von Aktuatoren bereitgestellt werden. Nochmal mit anderen Worten: Ein großes Gesichtsfeld "1" kann mit kurzer Brennweite und/oder geringerer Vergrößerung "aufrecht stehend" abgebildet werden, und ein kleineres Teilgesichtsfeld "2" kann mit längerer Brennweite und/oder stärkerer Vergrößerung "liegend und mit gefaltetem Strahlengang" abgebildet werden und kann die jeweiligen Gegebenheiten am besten angepasst werden. "1" ist bereits kurz ausgeführt, ermöglicht aber ein großes Gesichtsfeld, was jedoch den Spiegel groß machen kann, während "2" lang ausgeführt sein kann und durch das kleinere Gesichtsfeld nur einen kleineren Spiegel erfordert.

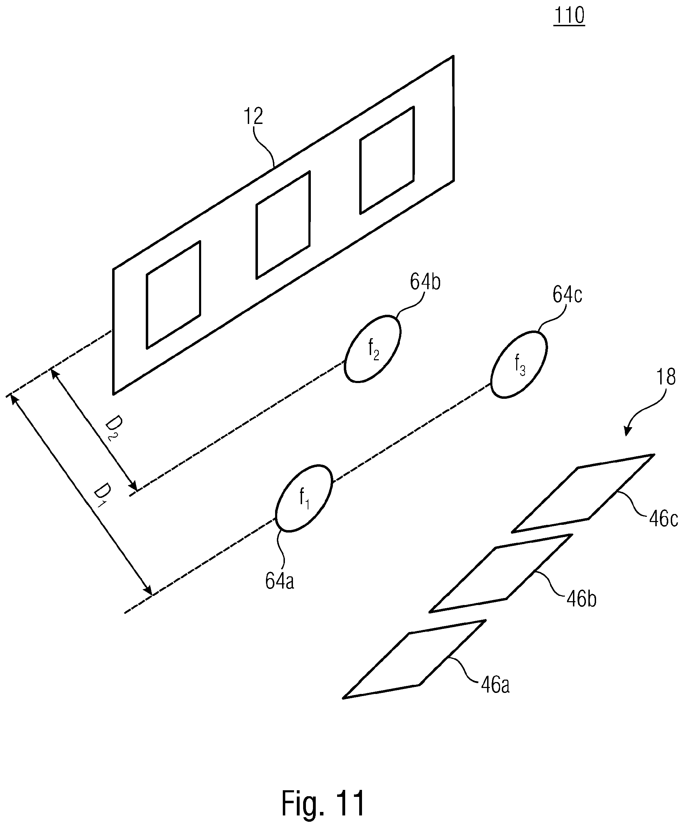

Fig. 11 zeigt eine schematische perspektivische Ansicht einer Multiaperturabbildungsvorrichtung 110 gemäß einem weiteren Ausführungsbeispiel, bei dem ein Abstand $d_1$ der Optiken 64a und 64c, die die Brennweiten $f_1$ und $f_3$ aufweisen, zu dem Bildsensor 12 größer ist als ein Abstand $d_2$ zwischen der Optik 64b und dem Bildsensor 12, wobei die Optik 64b die Brennweite $f_2$ aufweist. Der Abstand $d_1$ und/oder $d_2$ kann somit an die Brennweite der Optiken 64a-64c angepasst sein. Strahlumlenkbereiche 46a-46c der Strahlumlenkeinrichtung 18 können, wenn die Strahlumlenkeinrichtung 18 angeordnet ist, individuell steuerbar sein.

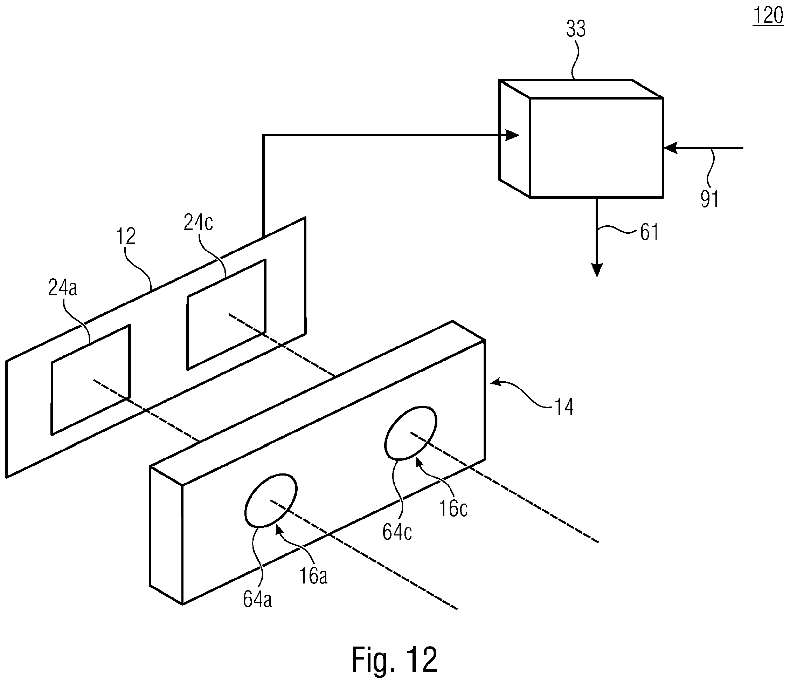

Fig. 12 zeigt eine schematische perspektivische Ansicht einer Vorrichtung 120 gemäß einem weiteren Ausführungsbeispiel. Die Vorrichtung 120 umfasst den Bildsensor 12 umfassend die Bildsensorbereiche 24a und 24c. Die Vorrichtung 120 umfasst ferner das Array 14 mit den optischen Kanälen 16a und 16c. Jeder der optischen Kanäle 16a und 16c weist unverändert die Optik 64a bzw. 64c zur Abbildung eines Teilgesichtsfelds 72a bzw. 72b des Gesamtgesichtsfelds 70 auf, wie es im Zusammenhang mit vorangehend beschriebenen Multiaperturabbildungsvorrichtungen beschrieben ist. Vereinfacht ausgedrückt können der Bildsensor 12 und das Array 14 in Abwesenheit des optischen Kanals zur Abbildung des Gesamtgesichtsfelds ausgeführt sein. Die Vorrichtung 120 umfasst die Berechnungseinheit 33, die ausgebildet ist, um Bildinformationen bezüglich der Teilgesichtsfelder 72a und 72b von dem Bildsensor 12 zu erhalten. Die Berechnungseinheit 33 ist ferner ausgebildet, um ein Signal 91 umfassend eine Bildinformation des Gesamtgesichtsfelds 70 zu erhalten. Die Berechnungseinheit 33 ist ausgebildet, um die Bildinformationen der Teilgesichtsfelder 72a und 72b mit der Bildinformation 91 des Gesamtgesichtsfelds 70 zu kombinieren, um die kombinierte Bildinformation 61 des Gesamtgesichtsfelds 70 zu erhalten.

Vereinfacht ausgedrückt kann die Vorrichtung 120 ein Zusatzmodul für eine bestehende Kameravorrichtung sein und ausgebildet sein, um von der Kameravorrichtung das Bildsignal bezüglich des erfassten Gesamtgesichtsfelds zu erhalten. Hierbei kann es sich um jede Kamera handeln. Die Vorrichtung 120 kann somit ausgebildet sein, um eine Auflösung der externen Vorrichtung zu erhöhen, indem das erhaltene Bildsignal 91 mit zusätzlich erfassten Teilgesichtsfeldern 72a und 72b überlagert wird, um die Qualität zu erhöhen.

Die Berechnungseinheit 33 kann ausgebildet sein, um dieselbe Funktionalität bereitzustellen, wie sie im Zusammenhang mit den hierin beschriebenen Multiaperturabbildungsvorrichtungen beschrieben ist. Das bedeutet, die Vorrichtung 120 kann konfiguriert sein, um die Bildinformation 91 mit einer ersten Bildauflösung zu erhalten, und um die Bildinformation bezüglich der Teilgesichtsfelder 72a und 72b mit einer höheren Auflösung zu erhalten. Die kombinierte Bildinformation 61 kann die höhere Auflösung oder zumindest eine höhere Auflösung als die Auflösung des Bildsignals 91 aufweisen. Die Auflösung des Bildsignals 91 kann entlang einer ersten und zweiten Bildrichtung innerhalb des oben beschriebenen Toleranzbereichs von 20%, 10 % oder 0 % der Auflösung der Bildsensorbereiche 24a und 24c multipliziert mit dem Wert 0,77, 0,66 oder 1/2 entsprechen oder geringer sein.

Die Berechnungseinheit 33 kann ferner ausgebildet sein, um die Bildzuordnung blockweise auszuführen, wie es im Zusammenhang mit der Fig. 5 beschrieben ist. Dies kann auch bedeuten, dass die Berechnungseinheit 33 ein Zuordnungskriterium ausführt, etwa eine Ähnlichkeitsanalyse, einen Kantenvergleich oder dergleichen, und um die Kombination der Blöcke nur auszuführen, wenn das Zuordnungskriterium erfüllt ist. Wenn das Zuordnungskriterium nicht erfüllt ist, kann die kombinierte Bildinformation von der Berechnungseinheit 33 so bereitgestellt werden, dass eine Kombination der Blöcke in dem ausgewerteten Block nicht erfolgt.

Die Berechnungseinheit 33 kann ausgebildet sein, um ein Stitching der Bildinformationen der Teilgesichtsfelder 72a und 72b basierend auf der Bildinformation des Gesamtgesichtsfelds 70 auszuführen. Da lediglich die Bildinformationen ausgewertet werden, kann es für die Berechnungseinheit 33 unerheblich sein, ob die Bildinformation bezüglich des Gesamtgesichtsfelds 70 von dem eigenen Bildsensor 12 oder dem Bildsensor einer externen Vorrichtung erhalten wird.

Wie es für die Multiaperturabbildungsvorrichtungen beschrieben ist, kann die Berechnungseinheit ausgebildet sein, um eine Tiefenkarte für die Bildinformation des Gesamtgesichtsfelds unter Verwendung einer ersten Disparität zwischen einer Blickrichtung des Kanals zur Erfassung des Gesamtgesichtsfelds und einer Abbildung des ersten Teilgesichtsfelds und/oder einer zweiten Disparität zwischen der Abbildung des Gesamtgesichtsfelds und einer Abbildung des zweiten Teilgesichtsfelds zu erstellen. Obwohl das Gesamtgesichtsfeld von einer anderen Kamera aufgenommen wurde, weist es eine Blickrichtung hin zu dem Gesamtgesichtsfeld auf, so dass eine Disparität auswertbar ist, insbesondere, wenn die Vorrichtung gemeinsam mit der das Bildsignal 91 bereitstellenden Vorrichtung kalibriert wird.

Wie es vorangehend beschrieben wurde, kann die Berechnungseinheit 33 ausgebildet sein, um die Tiefenkarte in einem Überlappbereich der Teilbilder der Teilgesichtsfelder 72a und 72b durch ausschließliche Verwendung der Bildinformationen der Teilgesichtsfelder erstellen.

Die Vorrichtung 120 kann einen optischen Bildstabilisator, etwa den optischen Bildstabilisator 22 aufweisen, der ausgebildet ist, um durch Erzeugen einer Relativbewegung zwischen dem Bildsensor 12 und dem Array 14 entlang einer ersten und einer zweiten Richtung, beispielsweise entlang der Bildrichtungen 28 und 32 die optische Bildstabilisierung bereitzustellen. Alternativ oder zusätzlich kann die Vorrichtung 120 eine Fokussiereinrichtung, etwa die Fokussiereinrichtung 87 umfassen, um einen Fokus der Vorrichtung 120 einzustellen. Dies kann durch Erzeugen einer Relativbewegung zwischen zumindest einer der Optiken 64a und 64b der optischen Kanäle 16a und 16b und dem Bildsensor 12 erfolgen.

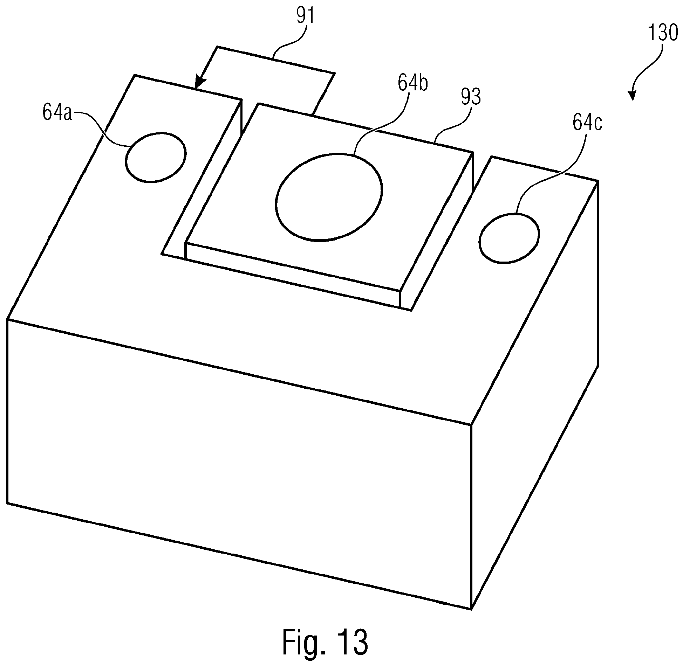

Fig. 13 zeigt eine schematische perspektivische Ansicht einer Ergänzungsvorrichtung 130 gemäß einem Ausführungsbeispiel. Die Ergänzungsvorrichtung 130 ist konfiguriert, um eine Kamera oder Bilderfassungsvorrichtung 93 zu ergänzen, wobei die Kamera oder Bilderzeugungsvorrichtung 93 ausgebildet ist, um das Bildsignal 91 zu erzeugen und der Ergänzungsvorrichtung 130 bereitzustellen. Die Ergänzungsvorrichtung 130 umfasst beispielsweise die Vorrichtung 120 und ist ausgebildet, um mit der Kamera 93 gekoppelt zu werden. Die Ergänzungsvorrichtung 130 ist somit konfiguriert, um die Bildverarbeitung der Kamera 93 zu erweitern oder zu ergänzen. Dies kann auch als eine Add-On-Vorrichtung verstanden werden, die beispielsweise ein Paar aus äußeren Kanälen als Auflösungs-Verstärker (Resolution-Boost) einem bestehenden System zur Verfügung stellt. Das bedeutet, der vorangehend beschriebene mittlere Kanal kann ein herkömmliches Kameramodul sein, das der Hersteller bspw. eines Mobiltelefons kennt und versteht und für den es eine etablierte Supply-Chain (Lieferkette) gibt. Die äußeren Kanäle mit den Optiken 64a und 64c sind ein Zusatzmodul, das neben oder um dieses herum aufgebaut wird. Es kann ein gefalteter Strahlengang verbleiben, die Bauhöhe passt sich somit dem alten Kameramodul an. Zwar wird eine Bauhöhe des Gesamtsystems nicht dünner als das Kameramodul 93, jedoch kann eine Erhöhung der Bauhöhe durch die Erhöhung der Auflösung durch das Zusatzmodul ebenso vermieden werden. Stattdessen haben die äußeren Kanäle zusammen eine größere Sensorfläche als das innere Modul. Wenn die Pixel gleich groß sind, hat das Modul damit eine höhere Gesamtauflösung und daher eine feinere Winkelauflösung. Daher lässt es sich zur Auflösungserhöhung verglichen mit der Kamera 93 benutzen. Auch hier sind die Sensoren in Ausführungsformen ohne Farbfilter ausführbar. Das bedeutet, die Bildinformationen der abgebildeten ersten und zweiten Teilgesichtsfelder können mit einer farbeinheitlichen Luminanzinformation bereitgestellt werden. Das Zusatzmodul kann, muss aber nicht notwendigerweise symmetrisch um das Kameramodul der Kamera 93 herum aufgebaut werden. Andere Aufbauformen, wie etwa diagonal oder asymmetrisch, sind ebenfalls vorstellbar und können über die Bildverarbeitung kompensiert werden. Tiefenkarten können unverändert generiert werden, eine optische und/oder elektronische Bildstabilisierung sowie ein Autofokus können vorgesehen sein.

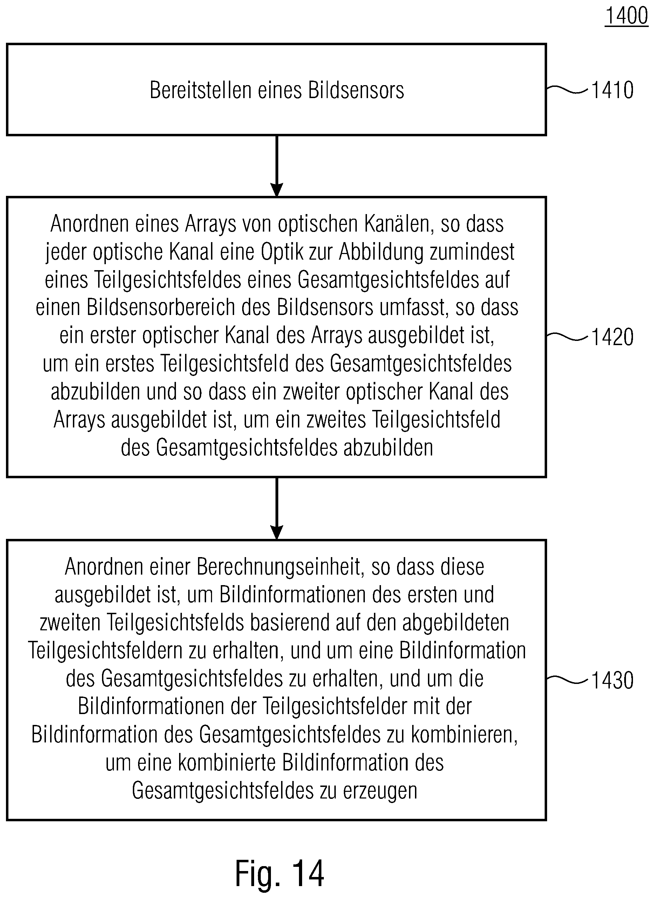

Fig. 14 zeigt ein schematisches Ablaufdiagramm eines Verfahrens 1400 zum Bereitstellen einer Vorrichtung gemäß einem Ausführungsbeispiel, etwa der Vorrichtung 120. In einem Schritt 1410 erfolgt ein Bereitstellen eines Bildsensors. In einem Schritt 1420 erfolgt ein Anordnen eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, so dass ein erster optischer Kanal des Arrays ausgebildet ist, um ein erstes Teilgesichtsfeld des Gesamtgesichtsfeldes abzubilden und so dass ein zweiter optischer Kanal des Arrays ausgebildet ist, um ein zweites Teilgesichtsfeld des Gesamtgesichtsfeldes abzubilden. In einem Schritt 1430 erfolgt ein Anordnen einer Berechnungseinheit, so dass diese ausgebildet ist, um Bildinformationen des ersten und zweiten Teilgesichtsfelds basierend auf den abgebildeten Teilgesichtsfeldern zu erhalten, und um eine Bildinformation des Gesamtgesichtsfeldes zu erhalten, und um die Bildinformationen der Teilgesichtsfelder mit der Bildinformation des Gesamtgesichtsfeldes zu kombinieren, um eine kombinierte Bildinformation des Gesamtgesichtsfeldes zu erzeugen.

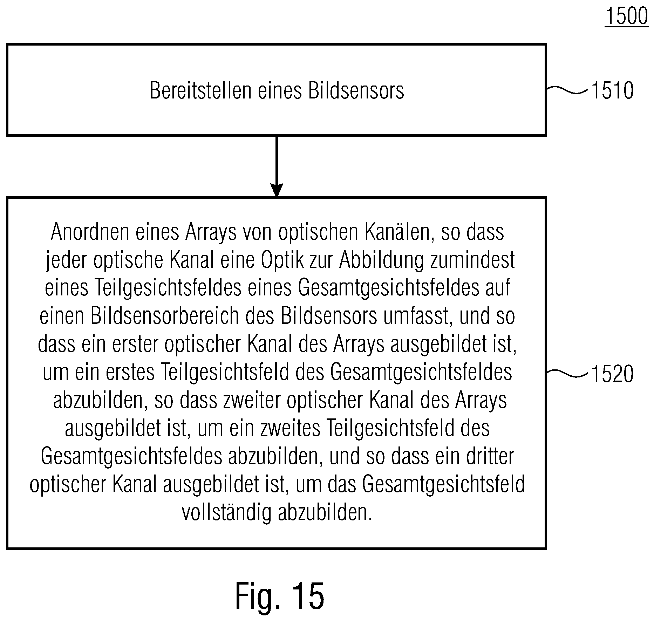

Fig. 15 zeigt ein schematisches Ablaufdiagramm eines Verfahrens 1500 zum Bereitstellen einer Multiaperturabbildungsvorrichtung gemäß einem Ausführungsbeispiel, etwa der Multiaperturabbildungsvorrichtung 10. In einem Schritt 1510 erfolgt ein Bereitstellen eines Bildsensors. In einem Schritt 1520 erfolgt ein Anordnen eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, und so dass ein erster optischer Kanal des Arrays ausgebildet ist, um ein erstes Teilgesichtsfeld des Gesamtgesichtsfeldes abzubilden, so dass ein zweiter optischer Kanal des Arrays ausgebildet ist, um ein zweites Teilgesichtsfeld des Gesamtgesichtsfeldes abzubilden, und so dass ein dritter optischer Kanal ausgebildet ist, um das Gesamtgesichtsfeld vollständig abzubilden.

Die hierin beschriebenen Ausführungsformen liefern den Vorteil, dass ein niedrigaufgelöstes Bild immer noch prior zur Unterstützung des Stitchings der hochaufgelösten Bilder verwendet wird, um den Stitching-Prozess zu vereinfachen. Dies ermöglicht geringere Verdeckungen in der Tiefenkarte durch die mittige Referenzkamera und symmetrische Anordnung der anderen Kanäle um diese. Dies resultiert auch in weniger Artefakten im finalen kombinierten Bild. Eine Live-View kann ohne Rechenaufwand direkt aus dem mittleren Kanal, gegebenenfalls unter Verwendung von Binning oder Überspringen von Pixeln erhalten werden, um die Auflösung soweit wie nötig zu reduzieren, aber das vollständige Gesichtsfeld im richtigen Aspektverhältnis ist bereits aus dem mittleren Kanal erhaltbar, da dieser das gesamte FOV abdeckt. Ein Video kann ohne Rechenaufwand direkt aus dem mittleren Kanal hergeleitet werden, was analog zu dem Ableiten von Bildern erfolgt. Die Verwendung lediglich dreier Kanäle, d. h., eine Gruppe von optischen Kanälen zum Erfassen der Teilgesichtsfelder umfasst optische Kanäle zum Erfassen genau zweier Teilgesichtsfelder, ermöglicht eine geringer Anzahl von Bauteilen, weniger Sensoren, eine geringe Datenübertragungs-Bandbreite und ein geringes Volumen der Vorrichtung oder Multiaperturabbildungsvorrichtung.

Hierin beschriebene Ausführungsbeispiele können als oder in Multiaperturabbildungssystemen mit linearer Kanalanordnung und kleinster Baugröße verwendet werden und die hierin beschriebenen Vorteile gegenüber bekannten Lösungen bieten.

Manche Ausführungen beziehen sich auf relative Richtungen wie oben/unten oder links/rechts. Es versteht sich, dass diese beliebig mit einander vertauschbar sind, wenn eine Orientierung im Raum verändert wird. Deshalb sollen diese Begriffe nicht einschränkend wirken und lediglich der besseren Verständlichkeit dienen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung (10; 30; 60; 70; 80; 90) mit:

     einem Bildsensor (12); und
     einem Array (14) von optischen Kanälen (16a-c), wobei jeder optische Kanal (16a-c) eine Optik (64a-c) zur Abbildung zumindest eines Teilgesichtsfeldes (72a-b) eines Gesamtgesichtsfeldes (70) auf einen Bildsensorbereich (24a-c) des Bildsensors (12) umfasst;
     wobei ein erster optischer Kanal (16a) des Arrays (14) ausgebildet ist, um ein erstes Teilgesichtsfeld (72a) des Gesamtgesichtsfeldes (70) abzubilden, wobei ein zweiter optischer Kanal (16c) des Arrays (14) ausgebildet ist, um ein zweites Teilgesichtsfeld (72b) des Gesamtgesichtsfeldes (70) abzubilden, und wobei ein dritter optischer Kanal (16b) ausgebildet ist, um das Gesamtgesichtsfeld (70) vollständig abzubilden; wobei
die Multiaperturabbildungsvorrichtung eine Strahlumlenkeinrichtung (18) zum gemeinsamen Umlenken eines Strahlengangs (26a, 26c) des ersten und zweiten optischen Kanals (16a, 16c) umfasst; und ein Strahlengang (26b) des dritten optischen Kanals (16b) direkt hin zu dem Gesamtgesichtsfeld (70) blickt; wobei die Strahlengänge (26a, 26c) des ersten und zweiten optischen Kanals (16a, 16c) umgelenkt werden, während der Strahlengang (26b) des dritten optischen Kanals ohne Umlenkung durch die Strahlumlenkeinrichtung (18) hin zu dem Gesamtgesichtsfeld (70) gelenkt wird; wobei die Multiaperturabbildungsvorrichtung eine Berechnungseinheit (33) umfasst, die ausgebildet ist, um ein Stitching der Bildinformationen des ersten Teilgesichtsfeldes (72a) und des zweiten Teilgesichtsfeldes (72b) basierend auf der Bildinformation des Gesamtgesichtsfelds (70) auszuführen.

2. Multiaperturabbildungsvorrichtung gemäß Anspruch 1, bei der eine Anordnung von Optiken (64a, 64c) zur Erfassung des ersten und des zweiten Teilgesichtsfelds in dem Array (14) bezogen auf einen Ort der Optik (64b) zur Abbildung des Gesamtgesichtsfeldes (70) symmetrisch ist; oder bei der eine Anordnung von Bildsensorbereichen (24a, 24c) zur Abbildung des ersten und zweiten Teilgesichtsfelds (72a-b) bezogen auf einen Ort des Bildsensorbereichs (24b) zur Abbildung des Gesamtgesichtsfeldes (70) symmetrisch ist.

3. Multiaperturabbildungsvorrichtung gemäß einem der Ansprüche 1 oder 2, bei der ein Bildformat des Gesamtgesichtsfeldes (70) einer redundanzfreien Kombination des abgebildeten ersten Teilgesichtsfeldes (72a) und des abgebildeten zweiten Teilgesichtsfeldes (72b) entspricht.

4. Multiaperturabbildungsvorrichtung gemäß einem der Ansprüche 1 bis 3, bei der die Berechnungseinheit (33) ausgebildet ist, um Bildinformationen des ersten und zweiten Teilgesichtsfelds basierend auf den abgebildeten Teilgesichtsfeldern (72a-b) zu erhalten, und um eine Bildinformation des Gesamtgesichtsfeldes (70) basierend auf dem abgebildeten Gesamtgesichtsfeld (70) zu erhalten, und um die Bildinformationen der Teilgesichtsfelder mit der Bildinformation des Gesamtgesichtsfeldes (70) zu kombinieren, um durch Kombination der Abbildungen in den Bildsensorbereichen (24a-c) eine kombinierte Bildinformation (61) des Gesamtgesichtsfeldes (70) zu erzeugen.

5. Multiaperturabbildungsvorrichtung gemäß einem der Ansprüche 1 bis 4, die ausgebildet ist, um eine Bildinformation des von dem dritten optischen Kanals erfassten Gesamtgesichtsfeldes (70) von dem Bildsensor mit einer ersten Bildauflösung zu erhalten, wobei die Multiaperturabbildungsvorrichtung eine Anzeigeeinrichtung umfasst und ausgebildet ist, um die Bildinformation mit höchstens der ersten Bildauflösung anzuzeigen.

6. Multiaperturabbildungsvorrichtung gemäß einem der Ansprüche 1 bis 5, mit einem optischen Bildstabilisator (22) zur Bildstabilisierung entlang einer ersten Bildachse (28) durch Erzeugen einer ersten Relativbewegung zwischen dem Bildsensor (12), dem Array (14) und der Strahlumlenkeinrichtung (18) und zur Bildstabilisierung entlang einer zweiten Bildachse (32) durch Erzeugen einer zweiten Relativbewegung (38) zwischen dem Bildsensor (12), dem Array (14) und der Strahlumlenkeinrichtung (18).

7. Multiaperturabbildungsvorrichtung gemäß einem der Ansprüche 1 bis 6, die ferner eine Fokussiereinrichtung (87) umfassend zumindest einen Aktor (89a-b) zum Einstellen eines Fokus der Vorrichtung, der ausgebildet ist, um eine Relativbewegung zwischen zumindest einer Optik (64a-c) eines der optischen Kanäle (16a-c) und dem Bildsensor (12) bereitzustellen, umfasst.

8. Multiaperturabbildungsvorrichtung gemäß Anspruch 7, bei der die Fokussiereinrichtung (87) ausgebildet ist, um eine dritte Relativbewegung für den ersten und zweiten optischen Kanal (16a, 16c) und eine vierte Relativbewegung für den dritten optischen Kanal (16b) bereitzustellen.

9. Multiaperturabbildungsvorrichtung gemäß einem der Ansprüche 1 bis 8, bei der die Bildsensorbereiche entlang einer Zeilenerstreckungsrichtung (35) auf dem Bildsensor (12) angeordnet sind, und wobei die Bildsensorbereiche (24a-c) entlang einer Bildrichtung (32) senkrecht zu der Zeilenerstreckungsrichtung eine innerhalb eines Toleranzbereichs von 20 % gleiche Abmessung aufweisen.

10. Multiaperturabbildungsvorrichtung gemäß einem der Ansprüche 1 bis 9, bei der der erste und der zweite optische Kanal (16a, 16c) Teil einer Gruppe von optischen Kanälen sind, die ausgebildet sind, um jeweils ein Teilgesichtsfeld (72a-b) des Gesamtgesichtsfeldes (70) abzubilden, wobei die Gruppe von optischen Kanälen ausgebildet ist, um gemeinsam das Gesamtgesichtsfeld (70) vollständig abzubilden.

11. Multiaperturabbildungsvorrichtung gemäß Anspruch 10, bei der die Gruppe von optischen Kanälen zum Erfassen genau zweier Teilgesichtsfelder (72a-b) ausgebildet ist.

12. Multiaperturabbildungsvorrichtung gemäß einem der Ansprüche 1 bis 11, bei der ein erstes Teilbild und ein zweites Teilbild, welche die von dem Bildsensor (12) bereitgestellte Bildinformationen des ersten und zweiten Teilgesichtsfeldes (72a-b) repräsentieren, entlang einer ersten Bildrichtung (32) eine gleiche Abmessung aufweisen wie ein Gesamtbild, das eine von dem Bildsensor bereitgestellte Bildinformation des Gesamtgesichtsfeldes (70) repräsentiert, und entlang einer zweiten Bildrichtung (28) eine unterschiedliche Abmessung verglichen mit dem Gesamtbild aufweisen.

13. Multiaperturabbildungsvorrichtung gemäß einem der Ansprüche 1 bis 12, die ausgebildet ist, um die abgebildeten ersten und zweiten Teilgesichtsfelder (72a-b) mit einer farbeinheitlichen Luminanzinformation bereitzustellen.

14. Multiaperturabbildungsvorrichtung gemäß einem der Ansprüche 1 bis 13, die als Mobiltelefon, Smartphone, Tablet oder Monitor ausgebildet ist.

15. Verfahren (1500) zum Bereitstellen einer Multiaperturabbildungsvorrichtung mit folgenden Schritten:

Bereitstellen (1510) eines Bildsensors; und Anordnen (1520) eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, und so dass ein erster optischer Kanal des Arrays ausgebildet ist, um ein erstes Teilgesichtsfeld des Gesamtgesichtsfeldes abzubilden, so dass ein zweiter optischer Kanal des Arrays ausgebildet ist, um ein zweites Teilgesichtsfeld des Gesamtgesichtsfeldes abzubilden, und so dass ein dritter optischer Kanal ausgebildet ist, um das Gesamtgesichtsfeld vollständig abzubilden; wobei die Multiaperturabbildungsvorrichtung eine Strahlumlenkeinrichtung (18) zum gemeinsamen Umlenken eines Strahlengangs (26a, 26c) des ersten und zweiten optischen Kanals (16a, 16c) umfasst; und ein Strahlengang (26b) des dritten optischen Kanals (16b) direkt hin zu dem Gesamtgesichtsfeld (70) blickt; so dass die Strahlengänge (26a, 26c) des ersten und zweiten optischen Kanals (16a, 16c) umgelenkt werden, während der Strahlengang (26b) des dritten optischen Kanals ohne Umlenkung durch die Strahlumlenkeinrichtung (18) hin zu dem Gesamtgesichtsfeld (70) gelenkt wird; so dass die Multiaperturabbildungsvorrichtung eine Berechnungseinheit (33) umfasst, die ausgebildet ist, um ein Stitching der Bildinformationen des ersten Teilgesichtsfeldes (72a) und des zweiten Teilgesichtsfeldes (72b) basierend auf der Bildinformation des Gesamtgesichtsfelds (70) auszuführen.

**Claims**

1. A multi-aperture imaging device (10; 30; 60; 70; 80; 90) comprising;

an image sensor (12); and an array (14) of optical channels (16a-c), each optical channel (16a-c) including an optic (64a-c) for projecting at least one partial field of view (72a-b) of a total field of view (70) onto an image sensor area (24a-c) of the image sensor (12); a first optical channel (16a) of the array (14) being configured to image a first partial field of view (72a) of the total field of view (70), a second optical channel (16b) of the array (14) being configured to image a second partial field of view (72b) of the total field of view (70), and a third optical channel (16c) being configured to fully image the total field of view (70); the multi-aperture imaging device including beam-deflecting means (18) for jointly deflecting an optical path (26a, 26c) of the first and second optical channels (16a, 16c); and an optical path (26b) of the third optical channel (16b) directing directly toward the total field of view (70); wherein the optical paths (26a, 26c) of the first and second optical channels (16a, 16c) are deflected, while the optical path (26b) of the third optical channel is directed toward the total field of view (70) without any deflection by the beam-deflecting means (18); the multi-aperture imaging device including a calculating unit (33) configured to perform stitching of the image information of the first partial field of view (72a) and the second partial field of view (72b) on the basis of the image information of the total field of view (70).

2. The multi-aperture imaging device as claimed in claim 1, wherein an arrangement of optics (64a, 64c) for capturing the first and second partial fields of view in the array (14) is symmetric in relation to a location of the optic (64b) for imaging the total field of view (70); or wherein an arrangement of image sensor areas (24a, 24c) for imaging the first and second partial fields of view (72a-b) is symmetric in relation to a location of the image sensor area (24b) for imaging the total field of view (70).

3. The multi-aperture imaging device as claimed in any of claims 1 or 2, wherein an image format of the total field of view (70) corresponds to a redundancy-free combination of the imaged first partial field of view (72a) and the imaged second partial field of view (72b).

4. The multi-aperture imaging device as claimed in any of claims 1 to 3, wherein the calculating unit (33) is configured to obtain image information of the first and second partial fields of view on the basis of the imaged partial fields of view (72a-b), and to obtain image information of the total field of view (70) on the basis of the imaged total field of view (70), and to combine the image information of the partial fields of view with the image information of the total field of view (70) so as to generate combined image information (61) of the total field of view (70) by combining the images in the image sensor areas (24a-c).

5. The multi-aperture imaging device as claimed in any of claims 1 to 4, configured to obtain image information of the total field of view (70), which is captured by the third optical channel, from the image sensor at a first image resolution, the multi-aperture imaging device including display means and being configured to display the image information at the first image resolution at most.

6. The multi-aperture imaging device as claimed in any of claims 1 to 5, including an optical image stabilizer (22) for image stabilization along a first image axis (28) by generating a first relative movement between the image sensor (12), the array (14) and the beam-deflecting means (18), and for image stabilization along a second image axis (32) by generating a second relative movement (38) between the image sensor (12), the array (14) and the beam-deflecting means (18).

7. The multi-aperture imaging device as claimed in any of claims 1 to 6, further including focusing means (87) including at least one actuator (89a-b) for adjusting a focus of the device, said actuator being configured to provide a relative movement between at least one optic (64a-c) of one of the optical channels (16a-c) and the image sensor (12).

8. The multi-aperture imaging device as claimed in claim 7, wherein the focusing means (87) is configured to provide a third relative movement for the first and second optical channels (16a, 16c) and a fourth relative movement for the third optical channel (16b).

9. The multi-aperture imaging device as claimed in any of claims 1 to 8, wherein the image sensor areas are arranged on the image sensor (12) along a line extension direction (35), and wherein the image sensor areas (24a-c) exhibit, along an image direction (32) perpendicular to the line extension direction, dimensions which are identical within a tolerance range of 20%.

10. The multi-aperture imaging device as claimed in any of claims 1 to 9, wherein the first and second optical channels (16a, 16c) are part of a group of optical channels configured to image a respective partial field of view (72a-c) of the total field of view (70), said group of optical channels being configured to jointly fully image the total field of view (70).

11. The multi-aperture imaging device as claimed in claim 10, wherein the group of optical channels is configured to capture precisely two partial fields of view (72a-b).

12. The multi-aperture imaging device as claimed in any of claims 1 to 11, wherein a first partial image and a second partial image, which represent the image information, provided by the image sensor (12), of the first and second partial fields of view (72a-b), have a same dimension, along a first image direction (32), as a total image which represents image information, provided by the image sensor, of the total field of view (70), and exhibit, along a second image direction (28), a different dimension as compared to the total image.

13. The multi-aperture imaging device as claimed in any of claims 1 to 12, configured to provide the imaged first and second partial fields of view (72a-b) having single-color luminance information.

14. The multi-aperture imaging device as claimed in any of claims 1 to 13, configured as a mobile phone, a smartphone, a tablet, or a monitor.

15. A method (1500) of providing a multi-aperture imaging device, comprising:

providing (1510) an image sensor; and
arranging (1520) an array of optical channels so that each optical channel includes an optic for projecting at least one partial field of view of a total field of view onto an image sensor area of the image sensor, and so that a first optical channel of the array is configured to image a first partial field of view of the total field of view so that a second optical channel of the array is configured to image a second partial field of view of the total field of view, and so that a third optical channel is configured to fully image the total field of view;
the multi-aperture imaging device including beam-deflecting means (18) for jointly deflecting an optical path (26a, 26c) of the first and second optical channels (16a, 16c); and an optical path (26b) of the third optical channel (16b) directing directly toward the total field of view (70); so that the optical paths (26a, 26c) of the first and second optical channels (16a, 16c) are deflected, while the optical path (26b) of the third optical channel is directed toward the total field of view (70) without any deflection by the beam-deflecting means (18);

so that the multi-aperture imaging device includes a calculating unit (33) configured to perform stitching of the image information of the first partial field of view (72a) and the second partial field of view (72b) on the basis of the image information of the total field of view (70).

## Revendications

1. Dispositif d'imagerie à ouvertures multiples (10 ; 30 ; 60 ; 70 ; 80 ; 90) comprenant:

   un capteur d'image (12) ; et
   un réseau (14) de canaux optiques (16a-c), chaque canal optique (16a-c) incluant une optique (64a-c) pour imager au moins un champ de vision partiel (72a-b) d'un champ de vision global (70) sur une zone de capteur d'image (24a-c) du capteur d'image (12) ;
   un premier canal optique (16a) du réseau (14) étant configuré pour imager un premier champ de vision partiel (72a) du champ de vision global (70), un deuxième canal optique (16c) du réseau (14) étant configuré pour imager un deuxième champ de vision partiel (72b) du champ de vision global (70), et un troisième canal optique (16b) étant configuré pour imager intégralement le champ de vision global (70) ; le dispositif d'imagerie à ouvertures multiples incluant un dispositif de déviation de faisceau (18) pour dévier conjointement un trajet de faisceau (26a, 26c) des premier et deuxième canaux optiques (16a, 16c) ; et un trajet de faisceau (26b) du troisième canal optique (16b) étant dirigé directement vers le champ de vision global (70) ; les trajets de faisceau (26a, 26c) des premier et deuxième canaux optiques (16a, 16c) étant déviés, tandis que le trajet de faisceau (26b) du troisième canal optique est dirigé vers le champ de vision global (70) sans être dévié par le dispositif de déviation de faisceau (18) ; le dispositif d'imagerie à ouvertures multiples incluant une unité de calcul (33), configurée pour effectuer un assemblage des informations d'image du premier champ de vision partiel (72a) et du deuxième champ de vision partiel (72b) sur la base de l'information d'image du champ de vision global (70).

2. Dispositif d'imagerie à ouvertures multiples selon la revendication 1, dans lequel un agencement des optiques (64a, 64c) destinées à imager le premier et le deuxième champs de vision partiels dans le réseau (14) est symétrique par rapport à un emplacement de l'optique (64b) destinée à imager le champ de vision global (70) ; ou
   dans lequel un agencement des zones de capteur d'image (24a, 24c) destinées à imager le premier et le deuxième champs de vision partiels (72a-b) est symétrique par rapport à un emplacement de la zone de capteur d'image (24b) destinée à imager le champ de vision global (70).

3. Dispositif d'imagerie à ouvertures multiples selon l'une des revendications 1 ou 2, dans lequel un format d'image du champ de vision global (70) correspond à une combinaison sans redondance du premier champ de vision partiel (72a) imagé et du deuxième champ de vision partiel (72b) imagé.

4. Dispositif d'imagerie à ouvertures multiples selon l'une des revendications 1 à 3, dans lequel l'unité de calcul (33) est configurée pour obtenir des informations d'image du premier et du deuxième champs de vision partiels sur la base des champs de vision partiels (72a-b) imagés, et obtenir une information d'image du champ de vision global (70) sur la base du champ de vision global (70) imagé, et combiner les informations d'image des champs de vision partiels avec l'information d'image du champ de vision global (70), afin de générer, par combinaison des images dans les zones de capteur d'image (24a-c), une information d'image combinée (61) du champ de vision global (70).

5. Dispositif d'imagerie à ouvertures multiples selon l'une des revendications 1 à 4, configuré pour obtenir, à partir du capteur d'image, une information d'image du champ de vision global (70) capté par le troisième canal optique avec une première résolution d'image, le dispositif d'imagerie à ouvertures multiples incluant un dispositif d'affichage et étant configuré pour afficher l'information d'image avec au plus la première résolution d'image.

6. Dispositif d'imagerie à ouvertures multiples selon l'une des revendications 1 à 5, comprenant un stabilisateur optique d'image (22) configuré pour stabiliser l'image le long d'un premier axe d'image (28) par génération d'un premier mouvement relatif entre le capteur d'image (12), le réseau (14) et le dispositif de déviation de faisceau (18), et pour stabiliser l'image le long d'un deuxième axe d'image (32) par génération d'un deuxième mouvement relatif (38) entre le capteur d'image (12), le réseau (14) et le dispositif de déviation de faisceau (18).

**7.** Dispositif d'imagerie à ouvertures multiples selon l'une des revendications 1 à 6, incluant en outre un dispositif de mise au point (87) incluant au moins un actionneur (89a-b) pour régler une mise au point du dispositif, ledit actionneur étant configuré pour fournir un mouvement relatif entre au moins une optique (64a-c) de l'un des canaux optiques (16a-c) et le capteur d'image (12).

**8.** Dispositif d'imagerie à ouvertures multiples selon la revendication 7, dans lequel le dispositif de mise au point (87) est configuré pour fournir un troisième mouvement relatif pour les premier et deuxième canaux optiques (16a, 16c) et un quatrième mouvement relatif pour le troisième canal optique (16b).

**9.** Dispositif d'imagerie à ouvertures multiples selon l'une des revendications 1 à 8, dans lequel les zones de capteur d'image sont disposées sur le capteur d'image (12) le long d'une direction d'extension des lignes (35), et dans lequel les zones de capteur d'image (24a-c) présentent, le long d'une direction d'image (32) perpendiculaire à la direction d'extension des lignes, une dimension identique dans une plage de tolérance de 20 %.

**10.** Dispositif d'imagerie à ouvertures multiples selon l'une des revendications 1 à 9, dans lequel les premier et deuxième canaux optiques (16a, 16c) font partie d'un groupe de canaux optiques configurés pour imager chacun un champ de vision partiel (72a-b) du champ de vision global (70), le groupe de canaux optiques étant configuré pour imager conjointement le champ de vision global (70) dans son intégralité.

**11.** Dispositif d'imagerie à ouvertures multiples selon la revendication 10, dans lequel le groupe de canaux optiques est configuré pour capter exactement deux champs de vision partiels (72a-b).

**12.** Dispositif d'imagerie à ouvertures multiples selon l'une des revendications 1 à 11, dans lequel une première image partielle et une deuxième image partielle, qui représentent les informations d'image du premier et du deuxième champs de vision partiels (72a-b) fournies par le capteur d'image (12), présentent, le long d'une première direction d'image (32), une dimension identique à celle d'une image globale qui représente une information d'image du champ de vision global (70) fournie par le capteur d'image, et, le long d'une deuxième direction d'image (28), une dimension différente par rapport à l'image globale.

**13.** Dispositif d'imagerie à ouvertures multiples selon l'une des revendications 1 à 12, configuré pour fournir les premier et deuxième champs de vision partiels (72a-b) imagés avec une information de luminance chromatiquement uniforme.

**14.** Dispositif d'imagerie à ouvertures multiples selon l'une quelconque des revendications 1 à 13, qui est réalisé sous la forme d'un téléphone mobile, d'un smartphone, d'une tablette ou d'un moniteur.

**15.** Procédé (1500) de mise à disposition d'un dispositif d'imagerie à ouvertures multiples, le procédé comprenant le fait de :

mettre à disposition (1510) un capteur d'image ; et

agencer (1520) un réseau de canaux optiques, de sorte que chaque canal optique inclue une optique pour imager au moins un champ de vision partiel d'un champ de vision global sur une zone de capteur d'image du capteur d'image, et de sorte qu'un premier canal optique du réseau soit configuré pour imager un premier champ de vision partiel du champ de vision global, qu'un deuxième canal optique du réseau soit configuré pour imager un deuxième champ de vision partiel du champ de vision global, et qu'un troisième canal optique soit configuré pour imager le champ de vision global dans son intégralité ; le dispositif d'imagerie à ouvertures multiples incluant un dispositif de déviation de faisceau (18) pour dévier conjointement un trajet de faisceau (26a, 26c) des premier et deuxième canaux optiques (16a, 16c) ; et un trajet de faisceau (26b) du troisième canal optique (16b) étant orienté directement vers le champ de vision global (70) ; de sorte que les trajets de faisceau (26a, 26c) des premier et deuxième canaux optiques (16a, 16c) soient déviés, tandis que le trajet de faisceau (26b) du troisième canal optique soit dirigé vers le champ de vision global (70) sans déviation par le dispositif de déviation de faisceau (18) ; de sorte que le dispositif d'imagerie à ouvertures multiples inclue une unité de calcul (33), configurée pour effectuer un assemblage des informations d'image du premier champ de vision partiel (72a) et du deuxième champ de vision partiel (72b) sur la base de l'information d'image du champ de vision global (70).

Fig. 1

Fig. 2a

Fig. 2b

Fig. 2c

Fig. 3

EP 4 369 708 B1

Fig. 4

Fig. 5

EP 4 369 708 B1

Fig. 6

Fig. 7

EP 4 369 708 B1

Fig. 8

EP 4 369 708 B1

Fig. 9

EP 4 369 708 B1

100

Fig. 10

Fig. 11

120

33

91

61

24c

12

24a

14

16c

64c

16a

64a

Fig. 12

Fig. 13

1400

| | |
|---|---|
| Bereitstellen eines Bildsensors | 1410 |

Anordnen eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, so dass ein erster optischer Kanal des Arrays ausgebildet ist, um ein erstes Teilgesichtsfeld des Gesamtgesichtsfeldes abzubilden und so dass ein zweiter optischer Kanal des Arrays ausgebildet ist, um ein zweites Teilgesichtsfeld des Gesamtgesichtsfeldes abzubilden

1420

Anordnen einer Berechnungseinheit, so dass diese ausgebildet ist, um Bildinformationen des ersten und zweiten Teilgesichtsfelds basierend auf den abgebildeten Teilgesichtsfeldern zu erhalten, und um eine Bildinformation des Gesamtgesichtsfeldes zu erhalten, und um die Bildinformationen der Teilgesichtsfelder mit der Bildinformation des Gesamtgesichtsfeldes zu kombinieren, um eine kombinierte Bildinformation des Gesamtgesichtsfeldes zu erzeugen

1430

Fig. 14

1500

| Bereitstellen eines Bildsensors | ~1510 |

↓

Anordnen eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, und so dass ein erster optischer Kanal des Arrays ausgebildet ist, um ein erstes Teilgesichtsfeld des Gesamtgesichtsfeldes abzubilden, so dass zweiter optischer Kanal des Arrays ausgebildet ist, um ein zweites Teilgesichtsfeld des Gesamtgesichtsfeldes abzubilden, und so dass ein dritter optischer Kanal ausgebildet ist, um das Gesamtgesichtsfeld vollständig abzubilden.

~1520

## Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015216140 A1
- DE 102015215845 A1
- DE 102015215836 A1
- DE 102015215841 A1
- WO 2017053874 A1